(19) Europäisches Patentamt
European Patent Office
Office européen des brevets

(11) EP 3 671 295 B1

# (12) EUROPEAN PATENT SPECIFICATION

(45) Date of publication and mention of the grant of the patent:
**15.06.2022 Bulletin 2022/24**

(21) Application number: **18858419.7**

(22) Date of filing: **20.09.2018**

(51) International Patent Classification (IPC):
***G02B 5/30*** *(2006.01)* ***G02F 1/1335*** *(2006.01)*
***C09D 163/00*** *(2006.01)* ***C09D 171/00*** *(2006.01)*
***C09J 7/20*** *(2018.01)* ***C09J 163/00*** *(2006.01)*

(52) Cooperative Patent Classification (CPC):
(C-Sets available)
**C08G 59/1438; C08G 59/24; C09D 163/00; C09D 171/00; C09J 163/00; G02B 1/14; G02B 5/3033;** C08G 65/18; G02F 1/133528; G02F 2201/50 (Cont.)

(86) International application number:
**PCT/KR2018/011186**

(87) International publication number:
**WO 2019/059691 (28.03.2019 Gazette 2019/13)**

## (54) POLARIZING PLATE AND IMAGE DISPLAY DEVICE COMPRISING SAME

POLARISATIONSPLATTE UND BILDANZEIGEVORRICHTUNG DAMIT

PLAQUE DE POLARISATION ET DISPOSITIF D'AFFICHAGE D'IMAGE LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.09.2017 KR 20170122706**
**22.09.2017 KR 20170122699**

(43) Date of publication of application:
**24.06.2020 Bulletin 2020/26**

(73) Proprietor: **Shanjin Optoelectronics (Suzhou) Co.,LTD.**
**Suzhou, Jiangsu, 215699 (CN)**

(72) Inventors:
- **HAN, Sanghun**
**Daejeon 34122 (KR)**
- **LEE, Mi So**
**Daejeon 34122 (KR)**
- **KWON, Yoonkyung**
**Daejeon 34122 (KR)**

(74) Representative: **Wang, Bo**
**Panovision IP**
**Ebersberger Straße 3**
**85570 Markt Schwaben (DE)**

(56) References cited:
**EP-A1- 3 144 327**
**JP-A- 2016 170 412**
**JP-A- 2016 170 412**
**KR-A- 20120 002 815**
**KR-A- 20160 001 501**
**KR-A- 20160 015 181**
**KR-A- 20160 037 811**
**KR-A- 20160 037 811**
**KR-A- 20170 062 468**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 671 295 B1

(52) Cooperative Patent Classification (CPC): (Cont.)

C-Sets
**C09J 163/00, C08K 5/375, C08K 5/49, C08L 33/08, C08L 71/00;**
**C09J 163/00, C08K 5/375, C08K 5/49, C08L 71/00**

## Description

### [Technical Field]

The present specification relates to a polarizing plate and an image display device comprising the same.

### [Background Art]

Existing polarizing plates for a liquid crystal display device uses a general polyvinyl alcohol-based polarizer, and have a constitution of attaching a protective film such as triacetyl cellulose (TAC) on at least one side surface of the polarizer.

In a recent polarizing plate market, demands for low light leakage and thinning have increased, and in order to satisfy these properties, a method of directly forming a protective film on a polarizer has been examined instead of using an existing protective substrate formed as a film in advance.

However, when directly forming a protective film on an existing elongation-type polyvinyl alcohol-based polarizer, a problem of the polarizer being torn by stress generated from polarizer shrinkage at a high temperature has been difficult to resolve compared to when using a protective substrate on both surfaces as in the art.

### [Disclosure]

### [Technical Problem]

The present specification is directed to providing a polarizing plate and an image display device comprising the same.

### [Technical Solution]

One embodiment of the present specification provides a polarizing plate comprising a polarizer; and a protective layer provided on one surface or both surfaces of the polarizer directly adjoining the polarizer, wherein the protective layer is a cured material of a photocurable composition for a polarizing plate protective layer comprising an epoxy compound and an oxetane-based compound, and, in a spectrum by Fourier transform infrared spectroscopy (FTIR) of the protective layer, the following Equation 1 is satisfied.

[Equation 1]

$$0.9 \leq \frac{I_e}{I_a + I_e}$$

In Equation 1,

$I_e$ is a ratio of peak intensity at 920 $cm^{-1}$ to 900 $cm^{-1}$ with respect to peak intensity at 1740 $cm^{-1}$ to 1700 $cm^{-1}$ in the spectrum by Fourier transform infrared spectroscopy (FTIR) of the protective layer, and

$I_a$ is peak intensity at 1420 $cm^{-1}$ to 1380 $cm^{-1}$ with respect to peak intensity at 1740 $cm^{-1}$ to 1700 $cm^{-1}$ in the spectrum by Fourier transform infrared spectroscopy (FTIR) of the protective layer.

Another embodiment of the present specification provides an image display device comprising the above-described polarizing plate.

### [Advantageous Effects]

A polarizing plate according to one embodiment of the present specification replaces an existing base layer provided with an adhering layer in between with one coating layer, and thereby has advantages of accomplishing thinning and weight lightening of the polarizing plate and minimizing costs and processes.

A polarizing plate according to one embodiment of the present specification has an advantage of having a small or almost no phase difference.

A polarizing plate according to one embodiment of the present specification has an advantage of, by comprising a protective layer having high tensile modulus and storage modulus, not causing significant shrinkage when curing a photocurable composition for a protective layer in order to form a protective layer.
In addition, there is an advantage in that light leakage caused by shrinkage or expansion of a polarizer can be suppressed even under a high temperature or high humidity environment.
In addition, tensile modulus and tensile modulus of the protective layer are high, and there is an advantage of having high durability even when a separate protective film is not included on the protective layer.
A polarizing plate according to one embodiment of the present specification has excellent durability under a high temperature environment, and has an advantage of suppressing light leakage when used in a liquid crystal display device having a large area.

[Description of Drawings]

FIG. 1 illustrates a polarizing plate according to one embodiment of the present specification.
FIG. 2 illustrates a polarizing plate according to another embodiment of the present specification.
FIG. 3 illustrates a polarizing plate according to still another embodiment of the present specification.
FIG. 4 is a sectional diagram illustrating one example of an image display device according to one embodiment of the present specification.
FIG. 5 is an FTIR spectrum of a polarizing plate for a protective layer of Comparative Example 8.
FIG. 6 is an FTIR spectrum of a polarizing plate for a protective layer of Example 1.

[Reference Numeral]

10: Polarizer
20: Protective Layer
30: Protective Film
40: Gluing Layer
100: Polarizing Plate
200: Liquid Crystal Panel

[Mode for Disclosure]

Herein, the present disclosure will be described.
In the present specification, a description of a certain member being placed "on" another member comprises not only a case of the one member adjoining the other member but a case of still another member being present between the two members.
In the present specification, a description of a certain part "comprising" certain constituents means capable of further comprising other constituents, and does not exclude other constituents unless particularly stated on the contrary.
In the present specification, FTIR means Fourier transform infrared spectroscopy, and a Varian 3100 FT-IR (manufactured by Varian, Inc.) may be used in measurements.
In the present specification, "peak intensity at 1740 $cm^{-1}$ to 1700 $cm^{-1}$" is peak intensity for a C=O bond of a protective layer, and is used for normalizing other peak intensity.
In the present specification, "peak intensity at 920 $cm^{-1}$ to 900 $cm^{-1}$" is peak intensity for a C-O bond of an oxirane group (stretching C-O of oxirane group) of an oxetane compound of a protective layer.
In the present specification, "peak intensity at 1420 $cm^{-1}$ to 1380 $cm^{-1}$" is peak intensity for a =CH-H bond of an acrylic compound (=CH-H bond of acrylate) of a protective layer, $I_e$ represents the presence of an epoxy group of the protective layer, and $I_a$ represents the presence of an acrylate group of the protective layer.
In the present specification, the peak intensity corresponds to a peak area of an FTIR spectrum. For example, the peak area may be derived using a direct integration method. In addition, assuming one peak of the FTIR spectrum having Gaussian distribution, the peak area may be expressed by the product of the height and the half value width of the peak.
In the present specification, the peak intensity may be each measured before/after curing a protective layer composition.
Hereinafter, a polarizing plate according to one embodiment of the present specification will be described.

According to FIG. 1, the polarizing plate according to one embodiment of the present specification comprises a polarizer (10); and a protective layer (20) provided on one surface or both surfaces of the polarizer (10) directly adjoining the polarizer.

One embodiment of the present specification provides a polarizing plate comprising a polarizer; and a protective layer provided on one surface or both surfaces of the polarizer directly adjoining the polarizer, wherein the protective layer is a cured material of a photocurable composition for a polarizing plate protective layer comprising an epoxy compound and an oxetane-based compound, and, in a spectrum by Fourier transform infrared spectroscopy (FTIR) of the protective layer, the following Equation 1 is satisfied.

[Equation 1]

$$0.9 \leq \frac{I_e}{I_a + I_e}$$

In Equation 1,

$I_e$ is a ratio of peak intensity at 920 $cm^{-1}$ to 900 $cm^{-1}$ with respect to peak intensity at 1740 $cm^{-1}$ to 1700 $cm^{-1}$ in the spectrum by Fourier transform infrared spectroscopy (FTIR) of the protective layer, and
$I_a$ is peak intensity at 1420 $cm^{-1}$ to 1380 $cm^{-1}$ with respect to peak intensity at 1740 $cm^{-1}$ to 1700 $cm^{-1}$ in the spectrum by Fourier transform infrared spectroscopy (FTIR) of the protective layer. Satisfying Equation 1 means the protective layer of the polarizing plate hardly comprising an acrylate group. This is effective in enhancing toughness and hardness of the protective layer compared to when the protective layer comprises an acrylate group or an acrylic compound.

In addition, stress is generated on the polarizer when elongating the polarizer or the polarizing plate, and cracks occur on the polarizer when exposing the polarizing plate to a high temperature. A protective layer is introduced to the polarizer for preventing this phenomenon, and when the protective layer comprises an acrylate group or an acrylic compound, the protective layer may not effectively protect the polarizer causing a problem of crack occurrences on the polarizer at a high temperature.

Meanwhile, when the protective layer does not comprise an acrylate group or an acrylic compound and comprises an epoxy compound and an oxetane compound, the protective layer effectively protects the polarizer, which effectively suppresses crack occurrences on the polarizer at a high temperature.

In one embodiment of the present specification, [Equation 1] may be represented by the following Equation 1-1 or Equation 1-2. This is effective in enhancing toughness and hardness of the protective layer compared to when the protective layer comprises an acrylate group or an acrylic compound.

[Equation 1-1]

$$0.95 \leq \frac{I_e}{I_a + I_e}$$

[Equation 1-2]

$$0.98 \leq \frac{I_e}{I_a + I_e}$$

In one embodiment of the present specification, the protective layer has a thickness of 4 μm to 11 μm, preferably 5 μm to 10 μm, and more preferably 6 μm to 8 μm. The protective layer thickness being smaller than the above-mentioned

range has a problem of decreasing hardness or high temperature durability of the protective layer, and the thickness being larger than the above-mentioned range is not proper in terms of thinning of the polarizing plate.

In one embodiment of the present specification, the protective layer may have a thermal expansion coefficient of 100 ppm/K or less, 85 ppm/K or less, greater than or equal to 10 ppm/K and less than or equal to 100 ppm/K, or greater than or equal to 10 ppm/K and less than or equal to 85 ppm/K at 80°C.

In one embodiment of the present specification, the protective layer may have a thermal expansion coefficient of 100 ppm/K or less, 85 ppm/K or less, greater than or equal to 10 ppm/K and less than or equal to 100 ppm/K, or greater than or equal to 10 ppm/K and less than or equal to 85 ppm/K when measured at a temperature of lower than 80°C.

In one embodiment of the present specification, the protective layer may have a thermal expansion coefficient of 100 ppm/K or less, 85 ppm/K or less, greater than or equal to 10 ppm/K and less than or equal to 100 ppm/K, or greater than or equal to 10 ppm/K and less than or equal to 85 ppm/K when measured at a temperature of higher than 40°C and lower than 80°C.

In one embodiment of the present specification, the protective layer may have a thermal expansion coefficient of 100 ppm/K or less, 85 ppm/K or less, greater than or equal to 10 ppm/K and less than or equal to 100 ppm/K, or greater than or equal to 10 ppm/K and less than or equal to 85 ppm/K at 70°C.

In one embodiment of the present specification, the protective layer may have a thermal expansion coefficient of 100 ppm/K or less, 85 ppm/K or less, greater than or equal to 10 ppm/K and less than or equal to 100 ppm/K, or greater than or equal to 10 ppm/K and less than or equal to 85 ppm/K at 60°C.

The thermal expansion coefficient of the protective layer satisfying the above-mentioned range has an advantage of effectively suppressing crack occurrences on the polarizing plate or the polarizer under a thermal shock environment.

The method of measuring the thermal expansion coefficient is not particularly limited, and for example, a cured specimen having a thickness of 50 μm prepared by coating a photocurable composition having the same composition as the protective layer is cut to a size of a 6 mm width and a 10 mm length, and while maintaining a tension load at 0.05 N, changes in the length are measured as the temperature is raised up to 150°C starting from 30°C. Herein, the temperature raising rate is 5°C/min, and after completing the measurement, a thermal expansion coefficient (CTE) value is calculated as a length changed from 40°C to a target temperature. The target temperature is a temperature of 80°C or lower than 80°C, and for example, is 70°C or 60°C.

In one embodiment of the present specification, the protective layer may have a glass transition temperature (Tg) of higher than or equal to 90°C and lower than or equal to 170°C, preferably higher than or equal to 100°C and lower than or equal to 150°C, and more preferably higher than or equal to 100°C and lower than or equal to 130°C. The glass transition temperature of the protective layer satisfying the above-mentioned numerical range has an advantage of maintaining properties of the protective layer under a high temperature environment.

The method of measuring the glass transition temperature of the protective layer is not particularly limited, and for example, a photocurable composition having the same composition as the protective layer is coated on a release film (for example, a polyethylene terephthalate film) to a thickness of 6 μm to 7 μm, and after curing the result by irradiating ultraviolet rays, the release film is removed, and the glass transition temperature is measured through differential scanning calorimetry (DSC) after taking 5 mg to 10 mg of the specimen. Herein, as for the measurement temperature, heat flow is measured while raising the temperature up to 150°C starting from the temperature of 25°C at a temperature raising rate of 5°C/min, and a glass transition temperature at the infection point is measured.

The polarizing plate according to one embodiment of the present specification comprises a protective layer directly formed on any one surface or both surfaces of the polarizer. Since the polarizer is vulnerable to external shock, common polarizing plates comprise a polarizer and, on both surfaces thereof, a protective film adhered with an adhesive. This has a problem in that the polarizing plate thickness increases as the thickness of the protective film attached.

However, by the polarizing plate according to one embodiment of the present specification comprising a protective layer provided on one surface or both surfaces of the polarizer, a separate protective film is not included, or a protective film is included on just one surface of the polarizer significantly decreasing the thickness, and a polarizing plate capable of cost savings is obtained. As a result, a thin-filmed and light-weighted image display device may be obtained.

In one embodiment of the present specification, the protective layer is for supporting and protecting the polarizer, and may be formed using methods well-known in the art.

Each of the protective layers of the polarizing plate according to one embodiment of the present specification may direct adjoin the polarizer. Directly adjoining one surface or both surfaces of the polarizer means the polarizer and the protective layer adjoining each other without an adhesive layer provided in between. In other words, by the protective layer according to the present specification being directly formed on the polarizer without an adhesive layer, a thin polarizing plate may be provided.

Each of the protective layers of the polarizing plate according to one embodiment of the present specification may direct adjoin both surfaces of the polarizer.

In one embodiment of the present specification, the protective layer may be provided on both surfaces of the

polarizer.

The protective layer of the polarizing plate according to one embodiment of the present specification is effective in suppressing crack occurrences on the polarizer under a harsh environment while protecting the polarizer.

In one embodiment of the present specification, the protective layer has storage modulus of 1,500 MPa or greater, greater than or equal to 1,500 MPa and less than or equal to 10,000 MPa, preferably greater than or equal to 1800 MPa and less than or equal to 8,000 MPa, and more preferably greater than or equal to 2,000 MPa and less than or equal to 7,000 MPa at 80°C. When the storage modulus of the protective layer satisfies the above-mentioned numerical range, stress applied to the polarizer is effectively suppressed, which is effective in effectively suppressing crack occurrences on the polarizer caused by the shrinkage or expansion of the polarizer under a high temperature or high humidity environment. In addition, adhesive strength for the polarizer is enhanced. As a result, by suppressing shrinkage and expansion of the polarizing plate at a high temperature, occurrences of light leakage may be prevented when using the polarizing plate in a liquid crystal panel, and excellent adhesive strength is obtained. Particularly, the protective layer having storage modulus of greater than or equal to 2,000 MPa and less than or equal to 7,000 MPa at 80°C has an advantage of very effectively suppressing crack occurrences on the polarizer by effectively suppressing polarizing plate shrinkage at a high temperature.

Storage modulus of the protective layer is measured through DMA after coating a photocurable composition having the same composition as the protective layer on a release film (for example, polyethylene terephthalate film) to a thickness of 50 μm, curing the result by irradiating ultraviolet rays under a condition of light intensity being 1000 $mJ/cm^2$ or greater, then removing the release film, and laser cutting the specimen to a certain size. Herein, the storage modulus is measured when constantly tensioning with 10% strain while, as the measurement temperature, raising the temperature up to 160°C starting from -30°C at a temperature raising rate of 5°C/min, and a storage modulus value at 80°C is recorded.

In one embodiment of the present specification, the protective layer has tensile modulus of 1,700 MPa or greater, preferably 1,800 MPa or greater, and more preferably 2,000 MPa or greater at 25°C. When the tensile modulus of the protective layer satisfies the above-mentioned numerical range, stress applied to the polarizer is effectively suppressed, which is effective in effectively suppressing crack occurrences on the polarizer caused by the shrinkage or expansion of the polarizer under a high temperature or high humidity environment. In addition, adhesive strength for the polarizer is enhanced. As a result, by suppressing shrinkage and expansion of the polarizing plate at a high temperature, occurrences of light leakage may be prevented when using the polarizing plate in a liquid crystal panel, and excellent adhesive strength is obtained.

Tensile modulus of the protective layer is measured by a universal testing machine (UTM) after coating a composition having the same composition as the protective layer on a release film (for example, polyethylene terephthalate film) to a thickness of 100 μm, curing the result by irradiating ultraviolet rays under a condition of light intensity being 1000 $mJ/cm^2$ or greater, then removing the release film, and laser cutting the specimen to a 10 mm width. Herein, the tensile modulus is obtained through a stress-strain (S-S) curve obtained by constantly tensioning with a measurement length of 50 mm and a tension rate of 50 mm/min at a measurement temperature of 25°C. The tensile modulus is obtained by multiplying the initial slope value of the S-S curve by 100.

In one embodiment of the present specification, when leaving the polarizing plate unattended for 4 hours or longer at 80°C, contractile force in any one or more of an absorption axis direction (MD direction) and a transmission axis direction (TD direction) may be from 3 N to 10 N. Satisfying the above-mentioned range may minimize crack occurrences on the polarizer during thermal shock. Herein, the time of being left unattended may be 4 hours or 5 hours.

In one embodiment of the present specification, when leaving the polarizing plate unattended for 4 hours or longer at 80°C, contractile force in an absorption axis direction (MD direction) is from 7 N to 9 N. Satisfying the above-mentioned range may minimize crack occurrences on the polarizer during thermal shock.

In one embodiment of the present specification, when leaving the polarizing plate unattended for 4 hours or longer at 80°C, contractile force in a transmission axis direction (TD direction) is from 4 N to 9 N. Satisfying the above-mentioned range may minimize crack occurrences on the polarizer during thermal shock.

As for the contractile force, contractile force in an MD direction or a TD direction is measured using a dynamic mechanical analyzer (DMA Q800, TA Instruments) by cutting the polarizing plate into a size of 2 mm (transmission axis direction)×50 mm (absorption axis direction), employing a gauge length of 15 mm, and leaving the specimen still for 4 hours or longer at 80°C in an isothermal state. Herein, a minimum load is measured over a thickness direction of the polarizer in order to maintain the polarizing plate flat before the measurement.

In one embodiment of the present specification, the polarizing plate satisfies the following Equation A. When the polarizing plate satisfies the following Equation A, a difference in the contractile force depending on each region of the polarizing plate is small, which is advantageous in terms of being usable in a large image display device.

$$0.01 \leq \frac{L_c - L_e}{L_i} \leq 1$$

In Equation A,

$L_c$ is contractile force of a region corresponding to a circle area with a diameter of 1 cm having the center of the polarizing plate as the origin,
$L_e$ is polarizing plate contractile force of a region corresponding to a circle area with a diameter of 1 cm adjoining two edge portions meeting at each vertex of the polarizing plate, and
$L_i$ is average contractile force in an absorption axis direction (MD direction) or a transmission axis direction (TD direction) of the polarizer; or average contractile force in an absorption axis direction (MD direction) or a transmission axis direction (TD direction) of the polarizing plate.

In the present specification, the center of the polarizing plate may mean the center of gravity of the polarizing plate.

In one embodiment of the present specification, Equation A may be represented by the following Equation A-1 or Equation A-2.

[Equation A-1]

$$0.01 \leq \frac{L_c - L_e}{L_i} \leq 0.8$$

[Equation A-2]

$$0.01 \leq \frac{L_c - L_e}{L_i} \leq 0.5$$

In one embodiment of the present specification, methods for satisfying tensile modulus, storage modulus and a thermal expansion coefficient of the protective layer are not particularly limited, and for example, a method of comprising a photopolymerizable compound having a high glass transition temperature (Tg) in a photocurable composition for forming the protective layer, a method of increasing accumulated light intensity, may be included.

In one embodiment of the present specification, the protective layer is preferably formed with a photocurable composition. When the protective layer is a curable resin layer formed from a photocurable composition as above, there are advantages in that the preparation method is simple, and furthermore, adhesion between the protective layer and the polarizer is excellent. In addition, durability of the polarizing plate may be further improved.

In one embodiment of the present specification, the photocurable composition herein is not particularly limited as long as the thermal expansion coefficient satisfies the above-mentioned range, and for example, a photocurable composition comprising an epoxy compound and an oxetane-based compound may be included. This has advantages in that heat resistance and water resistance are excellent, and the photocurable composition may be attached to the polarizer without an adhesive layer replacing an existing protective film that essentially requires an adhesive.

In one embodiment of the present specification, the photocurable composition for a polarizing plate protective layer comprises an epoxy compound and an oxetane-based compound.

In one embodiment of the present specification, the epoxy compound comprises an alicyclic epoxy compound. The alicyclic epoxy compound means a compound comprising one or more epoxidized aliphatic cyclic group. The alicyclic epoxy compound has a relatively high glass transition temperature, and therefore, is preferred in lowering a thermal expansion coefficient of the protective layer and increasing storage modulus thereof. As a result, the alicyclic epoxy compound performs a role of obtaining excellent durability under a high temperature or high humidity condition after curing.

Examples of the alicyclic epoxy compound may comprise an epoxycyclohexylmethyl epoxycyclohexane carboxylate-based compound represented by the following [Chemical Formula 1].

[Chemical Formula 1]

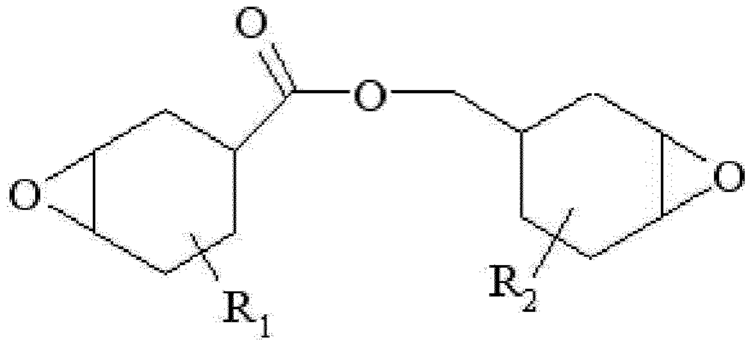

In Chemical Formula 1, $R_1$ and $R_2$ each independently represent hydrogen or an alkyl group.

The term alkyl group in the present specification may mean, unless particularly defined otherwise, a linear, branched or cyclic alkyl group having 1 to 20 carbon atoms, 1 to 16 carbon atoms, 1 to 12 carbon atoms, 1 to 8 carbon atoms or 1 to 4 carbon atoms, and the alkyl group may be substituted by any one or more substituents, or unsubstituted.

Another example of the alicyclic epoxy compound may comprise epoxycyclohexane carboxylate-based compound of alkanediol represented by the following Chemical Formula 2.

[Chemical Formula 2]

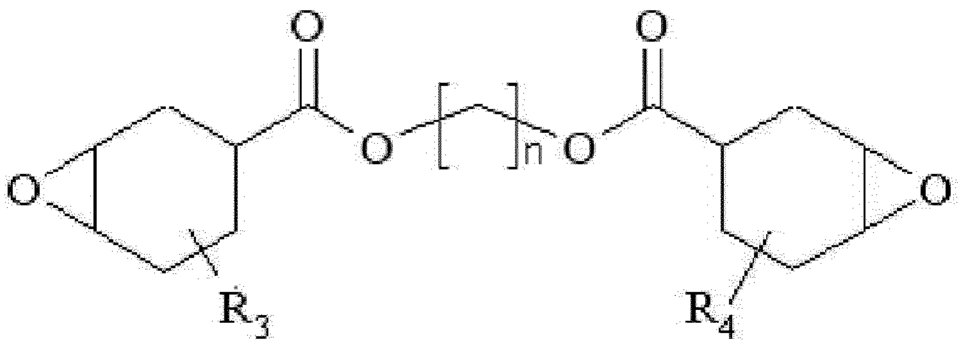

In Chemical Formula 2, $R_3$ and $R_4$ each independently represent hydrogen or an alkyl group, and n represents an integer of 2 to 20.

In addition, another example of the alicyclic epoxy compound may comprise an epoxy cyclohexylmethyl ester-based compound of dicarboxylic acid represented by the following Chemical Formula 3.

[Chemical Formula 3]

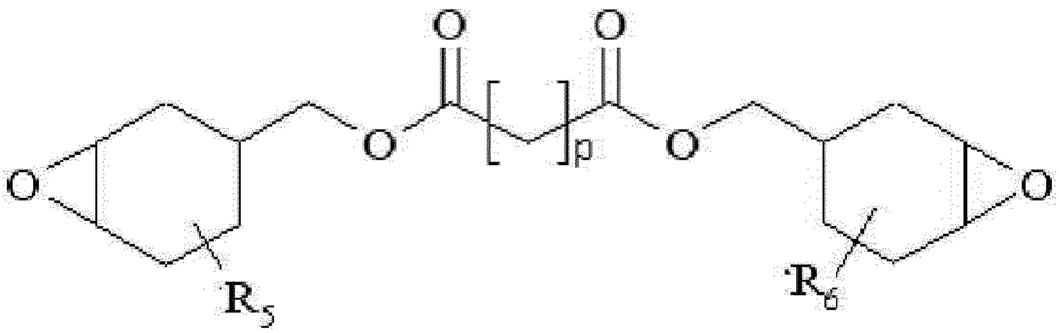

In Chemical Formula 3, $R_5$ and $R_6$ each independently represent hydrogen or an alkyl group, and p represents an integer of 2 to 20.

Another example of the alicyclic epoxy compound may comprise an epoxycyclohexylmethyl ether-based compound of polyethylene glycol represented by the following Chemical Formula 4.

[Chemical Formula 4]

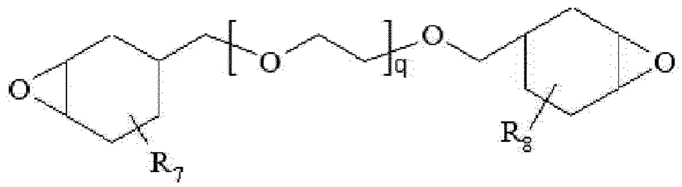

In Chemical Formula 4, $R_7$ and $R_8$ each independently represent hydrogen or an alkyl group, and q represents an integer of 2 to 20.

Another example of the alicyclic epoxy compound may comprise an epoxycyclohexylmethyl ether-based compound of alkanediol represented by the following Chemical Formula 5.

[Chemical Formula 5]

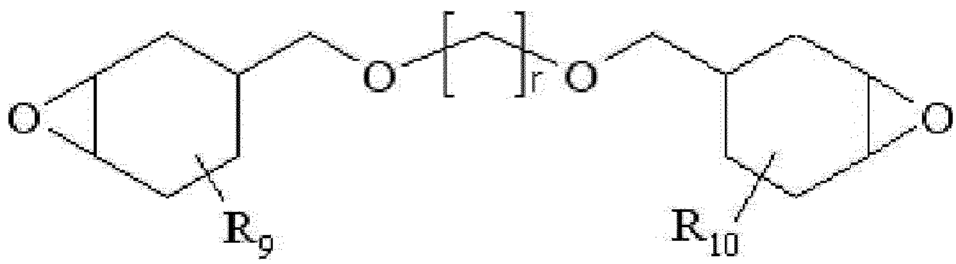

In Chemical Formula 5, $R_9$ and $R_{10}$ each independently represent hydrogen or an alkyl group, and r represents an integer of 2 to 20.

Another example of the alicyclic epoxy compound may comprise a diepoxytrispiro-based compound represented by the following Chemical Formula 6.

[Chemical Formula 6]

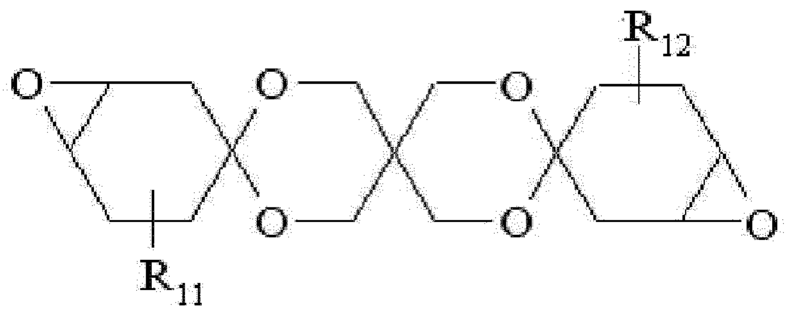

In Chemical Formula 6, $R_{11}$ and $R_{12}$ each independently represent hydrogen or an alkyl group.

Another example of the alicyclic epoxy compound may comprise a diepoxymonospiro-based compound represented by the following Chemical Formula 7.

[Chemical Formula 7]

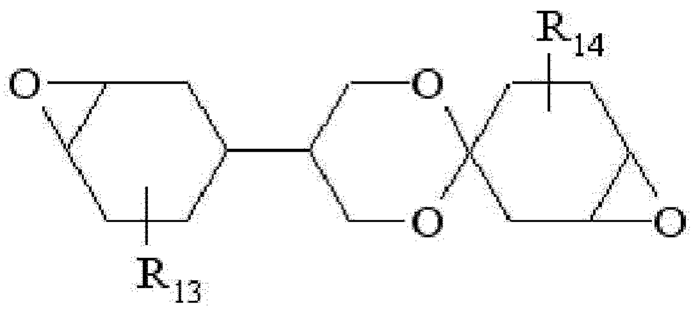

In Chemical Formula 7, $R_{13}$ and $R_{14}$ each independently represent hydrogen or an alkyl group.

Another example of the alicyclic epoxy compound may comprise a vinylcyclohexene diepoxide compound represented by the following Chemical Formula 8.

[Chemical Formula 8]

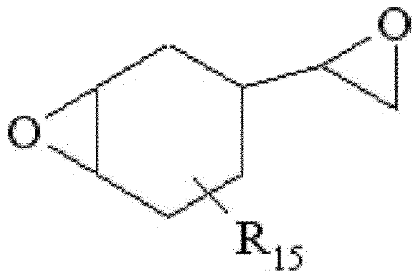

In Chemical Formula 8, $R_{15}$ represents hydrogen or an alkyl group.

Another example of the alicyclic epoxy compound may comprise an epoxycyclopentyl ether compound represented by the following Chemical Formula 9.

[Chemical Formula 9]

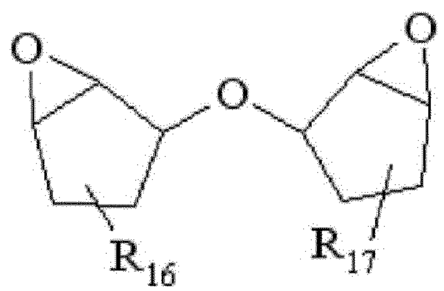

In Chemical Formula 9, $R_{16}$ and $R_{17}$ each independently represent hydrogen or an alkyl group.

Another example of the alicyclic epoxy compound may comprise a diepoxytricyclodecane compound represented by the following Chemical Formula 10.

[Chemical Formula 10]

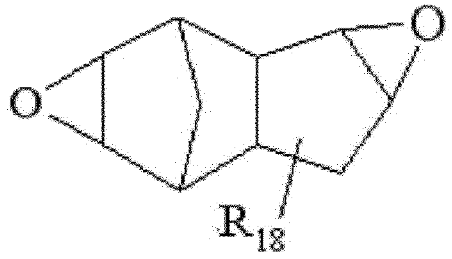

In Chemical Formula 10, $R_{18}$ represents hydrogen or an alkyl group.

In one embodiment of the present specification, as the alicyclic epoxy compound, using an epoxycyclohexylmethyl epoxycyclohexane carboxylate compound, an epoxycyclohexane carboxylate compound of alkanediol, an epoxycyclohexylmethyl ester compound of dicarboxylic acid or an epoxycyclohexylmethyl ether compound alkanediol is preferred more specifically, and one or more selected from the group consisting of an ester compound of 7-oxabicyclo[4,1,0]heptane-3-carboxylic acid and (7-oxa-bicyclo[4,1,0]hepto-3-yl)methanol (compound that $R_1$ and $R_2$ are hydrogen in Chemical Formula 1); an ester compound of 4-methyl-7-oxabicyclo[4,1,0]heptane-3-carboxylic acid and (4-methyl-7-oxa-bicyclo[4,1,0]hepto-3-yl)methanol (compound that $R_1$ is 4-$CH_3$ and $R_2$ is 4-$CH_3$ in Chemical Formula 1); an ester compound of 7-oxabicyclo[4,1,0]heptane-3-carboxylic acid and 1,2-ethanediol (compound that $R_3$ and $R_4$ are hydrogen, and n is 1 in Chemical Formula A); an ester compound of (7-oxabicyclo[4,1,0]hepto-3-yl)methanol and adipic acid (compound that $R_5$ and $R_6$ are hydrogen, and p is 2 in Chemical Formula 3); an ester compound of (4-methyl-7-oxabicyclo[4,1,0]hepto-3-yl)methanol and adipic acid (compound that $R_5$ and $R_6$ are 4-$CH_3$, and p is 2 in Chemical Formula 3); and an ether compound of (7-oxabicyclo[4,1,0]hepto-3-yl)methanol and 1,2-ethanediol (compound that $R_9$ and $R_{10}$ are hydrogen, and r is 1 in Chemical Formula 5) may be preferably used.

In one embodiment of the present specification, the epoxy compound and the oxetane-based compound have a weight ratio of 9:1 to 1:9, and a preferred weight ratio is from 9:1 to 7:3. When the weight ratio of the epoxy compound and the oxetane-based compound is as in the above-mentioned numerical range, the glass transition temperature of the composition may be maintained high, and an effect of greatly improving protective layer hardness after curing is obtained. In addition, the weight ratio satisfying the above-mentioned range has an advantage in that the protective layer has excellent storage modulus after curing.

In one embodiment of the present specification, the epoxy compound is preferably in 50 parts by weight to 90 parts by weight, and more preferably in 70 parts by weight to 90 parts by weight with respect to 100 parts by weight of the whole composition. Satisfying the above-mentioned range readily satisfies storage modulus and thermal expansion coefficient of the protective layer described above, and there are advantages in that the glass transition temperature of the whole composition is maintained high after curing, and adhesive strength of the composition for the polarizer is excellent.

In one embodiment of the present specification, the epoxy compound comprises a glycidyl ether-type epoxy compound. The glycidyl ether-type epoxy compound means an epoxy compound comprising at least one or more glycidyl ether groups.

In one embodiment of the present specification, examples of the glycidyl ether-type epoxy compound may comprise novolac epoxy, bisphenol A-based epoxy, bisphenol F-based epoxy, brominated bisphenol epoxy, n-butyl glycidyl ether, aliphatic glycidyl ether (12 to 14 carbon atoms), 2-ethylhexyl glycidyl ether, phenyl glycidyl ether, o-cresyl glycidyl ether, nonylphenyl glycidyl ether, ethylene glycol diglycidyl ether, diethylene glycol diglycidyl ether, propylene glycol diglycidyl ether, tripropylene glycol diglycidyl ether, neopentyl glycol diglycidyl ether, 1,4-butanediol diglycidyl ether, 1,6-hexanediol diglycidyl ether, trimethylolpropane triglycidyl ether, trimethylolpropane diglycidyl ether, trimethylolpropane polyglycidyl ether, polyethylene glycol diglycidyl ether or glycerin triglycidyl ether. In addition, glycidyl ether having a ring-type aliphatic skeleton such as 1,4-cyclohexanedimethanol diglycidyl ether, a hydrogen-added compound of an aromatic epoxy compound may be included as an example. Preferably, glycidyl ether having a ring-type aliphatic skeleton, and glycidyl ether having a ring-type aliphatic skeleton with preferably 3 to 20 carbon atoms, preferably 3 to 16 carbon atoms, and more preferably 3 to 12 carbon atoms may be used.

In one embodiment of the present specification, the epoxy compound may use a mixture of the alicyclic epoxy compound and the glycidyl ether-type epoxy compound.

In one embodiment of the present specification, when mixing the alicyclic epoxy compound and the glycidyl ether-type epoxy compound, the weight ratio is preferably from 3:1 to 1:3, and more preferably from 2:1 to 1:2.

In one embodiment of the present specification, the alicyclic epoxy compound may be included in 10% by

weight to 100% by weight, preferably in 20% by weight to 80% by weight, and more preferably in 30% by weight to 70% by weight based on the total weight of the epoxy compound. Satisfying the above-mentioned numerical range has an advantage in that the composition may be effectively cured when photocuring.

In one embodiment of the present specification, the glycidyl ether-type epoxy compound may be included in 10% by weight to 60% by weight, and preferably in 30% by weight to 50% by weight based on the total weight of the epoxy compound.

In one embodiment of the present specification, the oxetane-based compound is a compound having a 4-membered ring ether in the molecule, and may comprise 3-ethyl-3-hydroxymethyloxetane, 1,4-bis [(3-ethyl-3-oxetanyl)methoxymethyl] benzene, 3-ethyl-3-(phenoxymethyl)oxetane, di [(3-ethyl-3-oxetanyl)methyl] ether, 3-ethyl-3-(2-ethylhexyloxymethyl)oxetane, phenol novolac oxetane as an example. These oxetane compounds may be readily obtained as commercial products, and specific examples thereof may comprise aron oxetane OXT-101 (manufactured by TOAGOSEI Co., Ltd.), aron oxetane OXT-121 (manufactured by TOAGOSEI Co., Ltd.), aron oxetane OXT-211 (manufactured by TOAGOSEI Co., Ltd.), aron oxetane OXT-221 (manufactured by TOAGOSEI Co., Ltd.), aron oxetane OXT-212 (manufactured by TOAGOSEI Co., Ltd.).

In one embodiment of the present specification, the oxetane-based compound may be used either alone or as a mixture, and the content is preferably from 10 parts by weight to 50 parts by weight, and more preferably from 10 parts by weight to 30 parts by weight in 100 parts by weight of the whole composition. Satisfying the above-mentioned numerical range has advantages in that glass transition temperature and storage modulus of the whole composition may be maintained high after curing, and a protective layer having a uniform thickness may be formed by constantly maintaining viscosity.

In one embodiment of the present specification, the photocurable composition for a polarizing plate protective layer may further comprise a photoinitiator.

In one embodiment of the present specification, examples of the photoinitiator may comprise alpha-hydroxyketone-based compounds (ex. IRGACURE 184, IRGACURE 500, IRGACURE 2959, DAROCUR 1173; Ciba Specialty Chemicals (manufacturer)); phenylglyoxylate-based compounds (ex. IRGACURE 754, DAROCUR MBF; Ciba Specialty Chemicals (manufacturer)); benzyl dimethyl ketal-based compounds (ex. IRGACURE 651; Ciba Specialty Chemicals (manufacturer)); $\alpha$-aminoketone-based compounds (ex. IRGACURE 369, IRGACURE 907, IRGACURE 1300; Ciba Specialty Chemicals (manufacturer)); monoacyl phosphine-based compounds (MAPO) (ex. DAROCUR TPO; Ciba Specialty Chemicals (manufacturer)); bisacyl phosphene-based compounds (BAPO) (ex. IRGACURE 819, IRGACURE 819DW; Ciba Specialty Chemicals (manufacturer)); phosphine oxide-based compounds (ex. IRGACURE 2100; Ciba Specialty Chemicals (manufacturer)); metallocenebased compounds (ex. IRGACURE 784; Ciba Specialty Chemicals (manufacturer)); iodonium salts (ex. IRGACURE 250; Ciba Specialty Chemicals (manufacturer)); mixtures of one or more thereof (ex. DAROCUR 4265, IRGACURE 2022, IRGACURE 1300, IRGACURE 2005, IRGACURE 2010, IRGACURE 2020; Ciba Specialty Chemicals (manufacturer)). One, or two or more types thereof may be used in the present disclosure.

In one embodiment of the present specification, the photoinitiator may be included in 0.01 parts by weight to 5 parts by weight with respect to 100 parts by weight of the photocurable composition for a polarizing plate protective layer. The photoinitiator being included in the content of the above-mentioned numerical range has advantages in that curing is favorably progressed and adhesion is more enhanced compared to when the photoinitiator is not included or the content does not satisfy the above-mentioned numerical range.

In one embodiment of the present specification, the photocurable composition for a polarizing plate protective layer may further comprise a cation polymerization initiator in 1 parts by weight to 5 parts by weight with respect to 100 parts by weight of the whole composition.

In one embodiment of the present specification, the photocurable composition for a polarizing plate protective layer preferably has viscosity of greater than or equal to 50 cPs and less than or equal to 200 cPs at 25°C, and, for example, the viscosity may be from 50 cPs to 130 cPs or less at 25°C. When the composition viscosity satisfies the above-mentioned numerical range, the protective layer may be formed to be thin and has low viscosity, which leads to an advantage of having excellent workability.

The viscosity is measured at room temperature (25°C) with a No. 18 spindle using a Brookfield viscometer (manufactured by Brookfield Engineering). Herein, the amount of the composition is suitably from 6.5 mL to 10 mL, and stabilized values are measured within 5 minutes in order to avoid prolonged exposure to light.

In one embodiment of the present specification, the photocurable composition for a polarizing plate protective layer may further comprise one or more additives selected from the group consisting of a dye, a pigment, an epoxy resin, an ultraviolet stabilizer, an antioxidant, a colorant, a reinforcing agent, a filler, a defoamer, a surfactant, a photosensitizer and a plasticizer as necessary.

In one embodiment of the present specification, the additive may be included in 0.01 parts by weight to 5 parts by weight with respect to 100 parts by weight of the photocurable composition for a polarizing plate protective layer.

In one embodiment of the present specification, the method for forming the protective layer is not particularly

limited, and the protective layer may be formed using methods well known in the art. For example, a method of forming a protective layer by coating the photocurable composition for a polarizing plate protective layer on one surface of the polarizer using a coating method well known in the art such as spin coating, bar coating, roll coating, gravure coating, blade coating, and curing the result through ultraviolet irradiation may be used. For example, a method of irradiating ultraviolet light that is irradiation light using an ultraviolet irradiator may be used.

In one embodiment of the present specification, the ultraviolet wavelength may be from 100 nm to 400 nm, and preferably from 320 nm to 400 nm.

In one embodiment of the present specification, the light intensity of the irradiation light may be from 100 $mJ/cm^2$ to 1,000 $mJ/cm^2$, and preferably from 500 $mJ/cm^2$ to 1,000 $mJ/cm^2$.

In one embodiment of the present specification, the irradiation time of the irradiation light may be from 1 second to 10 minutes and preferably from 2 seconds to 30 seconds. Satisfying the above-mentioned irradiation time has an advantage of minimizing running wrinkle occurrences on the polarizer by preventing the excessive transfer of heat from a light source.

Protective Film

One embodiment of the present specification provides a polarizing plate having the protective layer provided on one surface of the polarizer, and a protective film attached on a surface opposite to the protective layer-provided surface of the polarizer by the medium of an adhesive layer, wherein the protective film has tensile modulus of 1700 MPa or greater at 25°C.

According to FIG. 2, the present specification provides a polarizing plate having the protective layer (20) provided on one surface of the polarizer (10), and a protective film (30) attached on a surface opposite to the protective layer (20)-provided surface of the polarizer (10) by the medium of an adhesive layer.

In the present specification, when the protective layer is formed on one surface of the polarizer, a separate protective film may be attached on a surface opposite to the protective layer-formed surface by the medium of an adhesive layer in order to support and protect the polarizer.

In one embodiment of the present specification, the protective film is for supporting and protecting the polarizer, and protective films made of various materials generally known in the art such as a polyethylene terephthalate (PET) film or a cycloolefin polymer (COP) film may be used. Considering optical properties, durability, economic feasibility, using polyethylene terephthalate among these is particularly preferred.

In one embodiment of the present specification, the protective film may have tensile modulus of greater than or equal to 1,800 MPa and less than or equal to 10,000 MPa, preferably greater than or equal to 2,000 MPa and less than or equal to 8,000 MPa, and more preferably greater than or equal to 3,000 MPa and less than or equal to 7,000 MPa at 25°C. Satisfying the above-mentioned numerical range may increase a polarizer protecting effect of the protective film. Specifically, tearing of the polarizer caused by stress generated by shrinkage or expansion of the polarizer under a high temperature or high humidity environment may be prevented.

In one embodiment of the present specification, attaching the polarizer and the protective film may be carried out using a method of coating a polarizing plate adhesive composition on the surface of the polarizer or the protective film using a roll coater, a gravure coater, a bar coater, a knife coater, a capillary coater, and then heat laminating these using a laminating roll, laminating through room temperature pressing, or irradiating UV after lamination. The polarizing plate adhesive composition will be described later.

Adhesive Layer

In one embodiment of the present specification, the adhesive layer is a cured material of an adhesive composition. A curable resin layer in which the adhesive layer is formed with a photocurable composition as above has advantages in that the preparation method is simple, and furthermore, adhesion with the protective film is excellent. In addition, durability of the polarizing plate may be further improved.

In one embodiment of the present specification, the adhesive layer has a thermal expansion coefficient of 130 ppm/K or less at 40°C to 80°C. The thermal expansion coefficient being greater than 130 ppm/K has a problem of crack occurrences on the polarizing plate under a thermal shock environment.

In one embodiment of the present specification, the adhesive layer may have storage modulus of greater than or equal to 100 MPa and less than or equal to 1,800 MPa, preferably greater than or equal to 150 MPa and less than or equal to 1,300 MPa, and more preferably greater than or equal to 180 MPa and less than or equal to 500 MPa at 80°C. Satisfying the above-mentioned range is effective in that adhesive strength by the adhesive layer increases and the protective film is not favorably peeled off. Particularly, when the storage modulus is greater than the above-mentioned range, storage modulus is too high decreasing adhesive strength, and functions as an adhesive layer is not sufficiently fulfilled.

Storage modulus of the adhesive layer is measured through DMA after coating a photocurable composition having the same composition as the adhesive layer on a release film (for example, polyethylene terephthalate film) to a thickness of 50 μm, curing the result by irradiating ultraviolet rays under a condition of light intensity being 1000 mJ/cm$^2$ or greater, then removing the release film, and laser cutting the specimen to a certain size. Herein, the storage modulus is measured when constantly tensioning with 10% strain while, as the measurement temperature, raising the temperature up to 160°C starting from -30°C at a temperature raising rate of 5°C/min, and a storage modulus value at 80°C is recorded.

In one embodiment of the present specification, the photocurable adhesive composition is not particularly limited as long as the thermal expansion coefficient satisfies the above-mentioned range, and for example, a photocurable composition comprising an epoxy compound and an oxetane-based compound may be included.

In one embodiment of the present specification, as the epoxy compound, at least one or more of an alicyclic epoxy compound and a glycidyl ether-type epoxy compound may be used, and preferably a mixture of an alicyclic epoxy compound and a glycidyl ether-type epoxy compound may be used. The glycidyl ether-type epoxy compound means an epoxy compound comprising at least one or more glycidyl ether groups.

In one embodiment of the present specification, Examples of the glycidyl ether-type epoxy compound may comprise novolac epoxy, bisphenol A-based epoxy, bisphenol F-based epoxy, brominated bisphenol epoxy, n-butyl glycidyl ether, aliphatic glycidyl ether (12 to 14 carbon atoms), 2-ethylhexyl glycidyl ether, phenyl glycidyl ether, o-cresyl glycidyl ether, nonylphenyl glycidyl ether, ethylene glycol diglycidyl ether, diethylene glycol diglycidyl ether, propylene glycol diglycidyl ether, tripropylene glycol diglycidyl ether, neopentyl glycol diglycidyl ether, 1,4-butanediol diglycidyl ether, 1,6-hexanediol diglycidyl ether, trimethylolpropane triglycidyl ether, trimethylolpropane diglycidyl ether, trimethylolpropane polyglycidyl ether, polyethylene glycol diglycidyl ether or glycerin triglycidyl ether. In addition, glycidyl ether having a ring-type aliphatic skeleton such as 1,4-cyclohexanedimethanol diglycidyl ether, a hydrogen-added compound of an aromatic epoxy compound may be included as an example. Preferably, glycidyl ether having a ring-type aliphatic skeleton, and glycidyl ether having a ring-type aliphatic skeleton with preferably 3 to 20 carbon atoms, preferably 3 to 16 carbon atoms, and more preferably 3 to 12 carbon atoms may be used, however.

In one embodiment of the present specification, when the alicyclic epoxy compound and the glycidyl ether-type epoxy compound are mixed, the weight ratio is preferably from 3:1 to 1:3, and more preferably from 2:1 to 1:2.

In one embodiment of the present specification, the alicyclic epoxy compound may be included in 10% by weight to 50% by weight, and preferably in 20% by weight to 40% by weight based on the total weight of the epoxy compound. Satisfying the above-mentioned numerical range has an advantage of effectively curing the composition when photocuring.

In one embodiment of the present specification, the glycidyl ether-type epoxy compound may be included in 10% by weight to 60% by weight, and preferably in 30% by weight to 50% by weight based on the total weight of the epoxy compound.

In one embodiment of the present specification, examples of the epoxy compound may comprise 3,4-epoxycyclohexylmethyl-3,4-epoxycyclohexane carboxylate, bis(3,4-epoxycyclohexylmethyl)adipate, a caprolactone-modified compound of 3,4-epoxycyclohexylmethyl-3,4-epoxycyclohexane carboxylate, an ester compound or caprolactone-modified compound of polyvalent carboxylic acid and 3,4-epoxycyclohexylmethyl alcohol, a silicone-based compound having an alicyclic epoxy group at the end, diglycidyl ether of bisphenol A, diglycidyl ether of bisphenol F, diglycidyl ether of brominated bisphenol A, a phenol novolac-type epoxy resin, a cresol novolac-type epoxy resin, a biphenyl-type epoxy resin, terephthalic acid diglycidyl ester, phthalic acid diglycidyl ester, an addition reactant of end carboxylic acid polybutadiene and a bisphenol A-type epoxy resin, dicyclopentadiene dioxide, limonene dioxide, 4-vinylcyclohexene dioxide, polyethylene glycol (repetition number 3 or higher) diglycidyl ether, polypropylene glycol (repetition number 3 or higher) diglycidyl ether, polytetramethylene glycol (repetition number 3 or higher) diglycidyl ether, hydrogen-added bisphenol A diglycidyl ether, epoxylated vegetable oil, 2-(3,4-epoxycyclohexyl)ethyltrimethoxysilane, 2-(3,4-epoxycyclohexyl)ethyltriethoxysilane, 3-glycidoxypropyltrimethoxysilane, 3-glycidoxypropylmethyldimethoxysilane, polybutadiene diglycidyl ether of both end hydroxyl groups, an inner epoxide of polybutadiene, a compound in which double bonds of a styrenebutadiene copolymer are partly epoxylated [for example "Epofriend" manufactured by Daicel Corporation] , a compound in which isoprene units of a block copolymer of an ethylenebutylene copolymer and polyisoprene are partly epoxylated (for example, "L-207" manufactured by KRATON Corporation)

In one embodiment of the present specification, the adhesive composition may further comprise a curable component, and the curable component may be a compound having a (meth)acryloyl group, or a compound having a plurality of polymerizable double bonds such as a vinyl group. For example, tripropylene glycol diacrylate, 1,9-nonanediol diacrylate, tricyclodecane dimethanol diacrylate, ring-type trimethylolpropane formal acrylate, dioxane glycol diacrylate, EO-modified diglycerin tetraacrylate, Aronix M-220 (manufactured by TOAGOSEI Co., Ltd.), light acrylate 1,9 ND-A (manufactured by Kyoeisha Chemical Co., Ltd.), light acrylate DGE-4A (manufactured by Kyoeisha Chemical Co., Ltd.), light acrylate DCP-A (manufactured by Kyoeisha Chemical Co., Ltd.), SR-531 (manufactured by Sartomer Co., Ltd.), CD-536 (manufactured by Sartomer Co., Ltd.) may be included. In addition, as necessary, various epoxy (meth)acrylate, urethane

(meth)acrylate, polyester (meth)acrylate, various (meth)acrylate-based monomers may be included. Comprising the curable component has advantages of increasing a curing rate, and accomplishing high-level curing even with low light intensity.

In one embodiment of the present specification, the polarizing plate adhesive composition may further comprise a photoinitiator. Descriptions on the photoinitiator are the same as the descriptions on the photoinitiator included in the protective layer provided above.

In one embodiment of the present specification, the polarizing plate adhesive composition may further comprise one or more additives selected from the group consisting of a dye, a pigment, an epoxy resin, an ultraviolet stabilizer, an antioxidant, a colorant, a reinforcing agent, a filler, a defoamer, a surfactant, a photosensitizer and a plasticizer as necessary. Descriptions on the additives are the same as the descriptions on the additives included in the protective layer provided above.

Polarizer

In one embodiment of the present specification, as the polarizer, polarizers well known in the art, for example, films formed with polyvinyl alcohol (PVA) comprising iodine or a dichroic dye may be used. The polarizer may be prepared by dyeing a polyvinyl alcohol film with iodine or a dichroic dye, however, the preparation method thereof is not particularly limited.

In the present specification, the polarizer means a state not comprising a protective layer (or protective film), and the polarizing plate means a state comprising a polarizer and a protective layer (or protective film).

In one embodiment of the present specification, the polarizer may have a thickness of 5 $\mu$m to 40 $\mu$m, and more preferably 5 $\mu$m to 25 $\mu$m. When the polarizer thickness is smaller than the above-mentioned range, optical properties may decline, and when the thickness is larger than the above-mentioned range, the degree of polarizer shrinkage at a low temperature (approximately -30°C) increases causing a problem in overall heat-related durability of the polarizing plate.

In one embodiment of the present specification, the polarizer is a polyvinyl alcohol-based film. The polyvinyl alcohol-based film is not particularly limited in the use as long as it comprises a polyvinyl alcohol resin or derivatives thereof. Herein, the derivatives of the polyvinyl alcohol resin may comprise a polyvinyl formal resin, a polyvinyl acetal resin. Alternatively, the polyvinyl alcohol-based film may use commercially available polyvinyl alcohol-based films generally used in polarizer preparations in the art such as P30, PE30 or PE60 of Kuraray Co. Ltd., and M2000, M3000 or M6000 of Nippon Gohsei Co., Ltd..

In one embodiment of the present specification, the polyvinyl alcohol-based film has a degree of polymerization of 1,000 to 10,000, and preferably 1,500 to 5,000. When the degree of polymerization satisfies the above-mentioned range, molecular movements are free, and mixing with iodine, a dichroic dye may be flexible.

Gluing Layer

In one embodiment of the present specification, the polarizing plate further comprises a gluing layer on the top of the protective layer. This is for attaching with a display device panel or an optical film such as a retardation film.

According to FIG. 3, the present specification comprises a protective layer (20) provided on one surface of the polarizer (10), a protective film (30) attached on a surface opposite to the protective layer (20)-provided surface of the polarizer (10) by the medium of an adhesive layer, and further comprises a gluing layer (40) provided on the top of the protective layer (20).

In one embodiment of the present specification, the gluing layer may be formed using various gluing agents well known in the art, and the type is not particularly limited. For example, the gluing layer may be formed using a rubberbased gluing agent, an acryl-based gluing agent, a silicone-based gluing agent, an urethane-based gluing agent, a polyvinyl alcohol-based gluing agent, a polyvinyl pyrrolidone-based gluing agent, a polyacrylamide-based gluing agent, a cellulosebased gluing agent, a vinylalkyl ether-based gluing agent. Considering transparency, heat resistance using an acryl-based gluing agent is particularly preferred among these.

In one embodiment of the present specification, the gluing layer may be formed using a method of coating a gluing agent on the top of the protective layer, or may also be formed using a method of attaching a gluing sheet prepared by coating a gluing agent on a release sheet and then drying the result on the top of the protective layer.

Image Display Device

One embodiment of the present specification provides an image display device comprising the polarizing plate described above.

In one embodiment of the present specification, the polarizing plate may be useful in image display devices

such as a liquid crystal display device.

In one embodiment of the present specification, the image display device comprises a liquid crystal panel; an upper polarizing plate provided on an upper surface of the liquid crystal panel; and a lower polarizing plate provided on a lower surface of the liquid crystal panel.

FIG. 4 illustrates an image display device providing a polarizing plate (100) on one surface of the liquid crystal panel (200). According to FIG. 4, one surface of the liquid crystal panel (200) and the polarizing plate (100) are glued by the medium of a gluing layer (40) of the polarizing plate (100).

In one embodiment of the present specification, the upper polarizing plate is the polarizing plate described above.

In one embodiment of the present specification, the lower polarizing plate is the polarizing plate described above.

In one embodiment of the present specification, the upper polarizing plate and the lower polarizing plate are the polarizing plate described above.

In one embodiment of the present specification, types of the liquid crystal panel are not particularly limited. For example, known panels comprising passive matrix-type panels such as a twisted nematic (TN)-type, a super twisted nematic (STN)-type, a ferroelectric (F)-type or a polymer dispersed (PD)-type; active matrix-type panels such as a two terminal-type or a three terminal-type; in plane switching (IPS)-type panels and vertical alignment (VA)-type panels may all be used. In addition, types of other constitutions forming a liquid crystal display device such as upper and lower substrates (ex. color filter substrate or array substrate) are not particularly limited as well, and constitutions known in the art may be employed without limit.

Hereinafter, the present specification will be described in more detail with reference to examples. However, the following examples are for illustrative purposes only, and the scope of the present specification is not limited thereby.

**<Preparation of Photocurable Composition> <Preparation Examples 1 to** 3: **Preparation of Protective Layer Composition Not Comprising Acrylate Group>**

Photocurable Composition 1 was prepared by adding 3.5 parts by weight of Irgacure 250 as a photoinitiator and 0.8 parts by weight of ESACURE ITX as a photosensitizer to 100 parts by weight of a photocurable composition comprising 80 parts by weight of 3,4-epoxycyclohexylmethyl-3',4'-epoxycyclohexane carboxylate (product name Celloxide-2021) and 20 parts by weight of 3-ethyl-3-[(3-ethyloxetan-3-yl)methoxymethyl]oxetane (TOAGOSEI Co., Ltd. aron oxetane OXT-221) .

In the same manner, Composition 2 and Composition 3 having compositions of the following Table 1 were prepared. The content of the photoinitiator and the content of the photosensitizer are based on the total weight of the remaining epoxy compound and oxetane compound after excluding the photoinitiator and the photosensitizer.

[Table 1]

| Category | | Epoxy Compound | | Oxetane Compound | Photoinitiator | Photosensitizer |
|---|---|---|---|---|---|---|
| | | Alicyclic Epoxy Compound | Glycidyl Ether-Type Epoxy Compound | | | |
| Product Name | | CEL2021P | CHDMDGE | OXT-221 | IRG-250 | ESCURE ITX |
| Preparation Example 1 | Composition 1 | 80 | - | 20 | 3.5 | 0.8 |
| Preparation Example 2 | Composition 2 | 42 | 28 | 30 | 3 | 0.8 |
| Preparation Example 3 | Composition 3 | 50 | - | 50 | 3.5 | 0.8 |

*CEL2021P: 3,4-epoxycyclohexylmethyl-3',4'-epoxycyclohexane carboxylate, CHDMDGE: 1,4-cyclohexyl dimethanol diglycidyl ether
OXT-221: 3-ethyl-3-[(3-ethyloxetan-3-yl)methoxymethyl]oxetane (TOAGOSEI Co., Ltd. aron oxetane OXT-221)
IRG-250: iodonium salt (product name: Irgacure-250, manufactured by Ciba Specialty Chemicals)

**<Preparation Examples A1 to A9: Preparation of Protective Layer Composition Comprising Acrylic Compound>**

**1) Preparation Examples A1 to A8**

Protective Layer Compositions A1 to A8 comprising an acrylic compound were prepared as in the compositions of the following Table 2. The content of the photoinitiator and the content of the photosensitizer are based on the total weight of the remaining epoxy compound, oxetane compound and acrylic compound after excluding the photoinitiator and the photosensitizer.

[Table 2]

| Category | | Epoxy Compo und | Oxeta ne Compo und | Acrylic Compound | | | Photoinitiato r | | Photosensit izer |
|---|---|---|---|---|---|---|---|---|---|
| Product Name | | C2021 P | OXT22 1 | DCP DA | PVE EA | VE EA | Irgac ure 250 | Irgac ure 819 | ESCURE ITX |
| Preparat ion Example A1 | Composit ion A1 | 56 | 14 | 30 | 0 | 0 | 1.85 | 1 | 0.74 |
| Preparat ion Example A2 | Composit ion A2 | 48 | 12 | 40 | 0 | 0 | 1.58 | 1.5 | 0.63 |
| Preparat ion Example A3 | Composit ion A3 | 56 | 14 | 0 | 30 | 0 | 1.85 | 1 | 0.74 |
| Preparat ion Example A4 | Composit ion A4 | 48 | 12 | 0 | 30 | 10 | 1.58 | 1.5 | 0.63 |
| Preparat ion Example A5 | Composit ion A5 | 56 | 14 | 0 | 20 | 10 | 1.85 | 1 | 0.74 |
| Preparat ion Example A6 | Composit ion A6 | 56 | 14 | 15 | 15 | 0 | 1.85 | 1 | 0.74 |
| Preparat ion Example A7 | Composit ion A7 | 56 | 14 | 15 | 5 | 10 | 1.85 | 1 | 0.74 |
| Preparat ion Example A8 | Composit ion A8 | 56 | 14 | 5 | 15 | 10 | 1.85 | 1 | 0.74 |
| * DCPDA: dicyclopentadiene acrylate<br>PVEEA: poly(2-2(2-vinyloxyethoxy)ethyl acrylate)<br>VEEA: 2-(2-vinyloxyethoxy)ethyl acrylate<br>IRG-819: (bis(2,4,6-trimethylbenzoyl)-phenylphosphine oxide) | | | | | | | | | |

**2) Preparation Example A9**

Photocurable Composition A9 was prepared by adding 3 parts by weight of IRG-819 (bis(2,4,6-trimethylbenzoyl)-phenylphosphine oxide) as a photoinitiator to 100 parts by weight of a photocurable composition comprising 80 parts by weight of 4-hydroxybutyl acrylate (manufactured by Osaka Organic Chemicals) and 20 parts by weight of tris(2-acryloyloxyethyl)isocyanurate (product name: FA-731A, manufactured by Hitachi Chemical Co., Ltd.).

**<Preparation Examples C1 to C3: Preparation of Other Protective Layer Compositions>**

**<Preparation Example C1>**

Photocurable Composition C1 was prepared by adding 3 parts by weight of IRG-819 (bis(2,4,6-trimethylbenzoyl)-phenylphosphine oxide) as a photoinitiator to 100 parts by weight of a photocurable composition comprising 90 parts by weight of iso-bornyl acrylate and 10 parts by weight of 2-hydroxyethyl acrylate.

**<Preparation Example C2>**

Photocurable Composition C2 was prepared by adding 3 parts by weight of Irgacure-250 (manufactured by Ciba Specialty Chemicals) as a photoinitiator and 1 parts by weight of ESACURE ITX as a photosensitizer to 100 parts by weight of a photocurable composition comprising 30 parts by weight of 3,4-epoxycyclohexylmethyl-3',4'-epoxycyclohexane carboxylate (product name Celloxide-2021), 20 parts by weight of 3-ethyl-3-[(3-ethyloxetan-3-yl)methoxymethyl]oxetane (TOAGOSEI Co., Ltd. aron oxetane OXT-221), 40 parts by weight of 1,4-cyclohexyl dimethanol diglycidyl ether (CHDMDGE) and 10 parts by weight of nonanediol diacrylate.

**<Preparation Example C3>**

Photocurable Composition C3 was prepared by adding 2 parts by weight of Irgacure-250 (manufactured by Ciba Specialty Chemicals) as a photoinitiator and 1 parts by weight of ESACURE ITX as a photosensitizer to 100 parts by weight of a photocurable composition comprising 35 parts by weight of 3,4-epoxycyclohexylmethyl-3',4'-epoxycyclohexane carboxylate (product name Celloxide-2021), 5 parts by weight of 3-ethyl-3-[(3-ethyloxetan-3-yl)methoxymethyl]oxetane (TOAGOSEI Co., Ltd. aron oxetane OXT-221), 40 parts by weight of 3-ethyl-3-[(2-ethylhexyloxy)methyl]oxetane (TOAGOSEI Co., Ltd. aron oxetane OXT-212) and 20 parts by weight of 1,4-cyclohexyl dimethanol diglycidyl ether (CHDMDGE).

**<Preparation of Adhesive Composition>**

**<Adhesive Composition 1>**

Adhesive Composition 1 was prepared by adding 3 parts by weight of Irgacure 250 as a photoinitiator and 1 parts by weight of ESACURE ITX as a photosensitizer to 100 parts by weight of a photocurable composition comprising 30 parts by weight of 3,4-epoxycyclohexylmethyl-3',4'-epoxycyclohexane carboxylate (product name Celloxide-2021), 20 parts by weight of 3-ethyl-3-[(3-ethyloxetan-3-yl)methoxymethyl]oxetane (TOAGOSEI Co., Ltd. aron oxetane OXT-221), 40 parts by weight of 1,4-cyclohexyl dimethanol diglycidyl ether (CHDMDGE) and 10 parts by weight of nonanediol diacrylate.

**<Adhesive Composition 2>**

Adhesive Composition 2 was prepared by adding 0.6 parts by weight of CPI-100P (manufactured by San-Apro Ltd.) and 1.25 parts by weight of IK-1 (manufactured by San-Apro Ltd.) as a photoinitiator, and 0.85 parts by weight of ESACURE ITX as a photosensitizer to 100 parts by weight of a photocurable composition comprising 35 parts by weight of 3,4-epoxycyclohexylmethyl-3',4'-epoxycyclohexane carboxylate (product name Celloxide-2021), 5.5 parts by weight of 3-ethyl-3-[(3-ethyloxetan-3-yl)methoxymethyl]oxetane (TOAGOSEI Co., Ltd. aron oxetane OXT-221), 39.5 parts by weight of 3-ethyl-3-[(2-ethylhexyloxy)methyl]oxetane (TOAGOSEI Co., Ltd. aron oxetane OXT-212) and 20 parts by weight of 1,4-cyclohexyl dimethanol diglycidyl ether (CHDMDGE).

**<Examples and Comparative Examples: Manufacture of Polarizing Plate>**

**<Example 1>-Structure of Protective Film/Polarizing Plate/Protective Layer**

A polarizer was prepared using a method of dyeing a dichroic dye on a polyvinyl alcohol (PVA)-based resin film, then elongating the result in a certain direction and crosslinking the result. On one surface of the prepared polarizer, Adhesive Composition 1 was coated, and after laminating a PET film (TA-044, manufactured by Toyobo Co., Ltd.) having a thickness of 80 μm thereon as a protective film, the polarizer and protective film were adhered to each other through curing the adhesive layer by irradiating ultraviolet rays of 800 $mJ/cm^2$ using an ultraviolet irradiator D-bulb. After that, on a surface opposite to the protective film-adhered surface, Photocurable Composition 1 of Preparation Example 1 was coated using a roll coater, and a protective layer was formed by irradiating ultraviolet rays of 800 $mJ/cm^2$ using an ultraviolet irradiator D-bulb to manufacture a polarizing plate. The protective layer had a thickness of 6 μm.

**<Example 2>**

A polarizing plate was manufactured in the same manner as in Example 1 except that Photocurable Composition 2 was used instead of Photocurable Composition 1 as a material of the protective layer.

**<Comparative Example 1>**

A polarizing plate was manufactured in the same manner as in Example 1 except that Photocurable Composition 3 was used instead of Photocurable Composition 1 as a material of the protective layer.

**<Comparative Example 2>**

A polarizing plate was manufactured in the same manner as in Example 1 except that the protective layer thickness was changed to 2 μm.

**<Comparative Example 3>**

A polarizing plate was manufactured in the same manner as in Example 1 except that Composition C1 was used instead of Photocurable Composition 1.

**<Comparative Example 4>**

A polarizing plate was manufactured in the same manner as in Example 1 except that Composition C2 was used instead of Photocurable Composition 1.

**<Comparative Example 5>-Structure of Protective Film/Polarizing Plate/Protective Film**

Polarizing Plate having a protective film with a thickness of 80 μm adhered on both surfaces of a polarizer was manufactured by coating Adhesive Composition 2 on each of both surfaces of the same polarizer as used in Example 1, laminating a PET protective film thereon, and curing the adhesive layer through irradiating ultraviolet rays of 800 $mJ/cm^2$ using an ultraviolet irradiator D-bulb to adhere the polarizer and the protective film to each other.

**<Comparative Example 6>-Structure of Protective film/Polarizing Plate/Protective Film**

Polarizing Plate 6 was manufactured in the same manner as in Comparative Example 5 except that Photocurable Composition 1 was used instead of Adhesive Composition 2.

**<Comparative Examples 7 to 14>**

Polarizing plates were manufactured in the same manner as in Example 1 except that Photocurable Compositions A1 to A8 were used instead of Photocurable Composition 1. In other words, the protective layers of the polarizing plates of Comparative Examples 7 to 14 included an acrylic compound.

**<Comparative Example 15>**

A polarizing plate was manufactured in the same manner as in Example 1 except that Photocurable Composition 3 was used instead of Photocurable Composition 1 as a material of the protective layer.

**<Comparative Example 16>**

A polarizing plate was manufactured in the same manner as in Example 1 except that Photocurable Composition A9 was used instead of Photocurable Composition 1 as a material of the protective layer.

**<Reference Example 17>**

A polarizing plate was manufactured in the same manner as in Example 1 except that Photocurable Composition C3 was used instead of Photocurable Composition 1 as a material of the protective layer.

Protective layer compositions and thicknesses of the polarizing plates of the examples, the comparative examples and the reference example are shown in the following Table 3.

[Table 3]

| Category | Layer | Composition | Thickness |
|---|---|---|---|
| Example 1 | Protective Layer | Composition 1 | 6 μm |
| Example 2 | Protective Layer | Composition 2 | 6 μm |
| Comparative Example 1 | Protective Layer | Composition 3 | 6 μm |
| Comparative Example 2 | Protective Layer | Composition 1 | 2 μm |
| Comparative Example 3 | Protective Layer | Composition C1 | 6 μm |
| Comparative Example 4 | Protective Layer | Composition C2 | 6 μm |
| Comparative Example 5 | Adhesive Layer | Adhesive Composition 2 | 2 μm |
| | Adhesive Layer | Adhesive Composition 2 | 2 μm |
| Comparative Example 6 | Adhesive Layer | Composition 1 | 2 μm |
| | Adhesive Layer | Composition 1 | 2 μm |
| Comparative Example 7 | Protective Layer | Composition A1 | 6 μm |
| Comparative Example 8 | Protective Layer | Composition A2 | 6 μm |
| Comparative Example 9 | Protective Layer | Composition A3 | 6 μm |
| Comparative Example 10 | Protective Layer | Composition A4 | 6 μm |
| Comparative Example 11 | Protective Layer | Composition A5 | 6 μm |
| Comparative Example 12 | Protective Layer | Composition A6 | 6 μm |
| Comparative Example 13 | Protective Layer | Composition A7 | 6 μm |
| Comparative Example 14 | Protective Layer | Composition A8 | 6 μm |
| Comparative Example 15 | Protective Layer | Composition 3 | 6 μm |
| Comparative Example 16 | Protective Layer | Composition A9 | 6 μm |
| Reference Example 17 | Protective Layer | Composition C3 | 6 μm |

The adhesive layers of Example 2, Comparative Examples 1 to 4, 7 to 16 and Reference Example 17 are an adhesive layer having a thickness of 2 μm using Adhesive Composition 1 in the same manner as in Example 1.

**<Experimental Example>**

**<Method of Property Measurements>**

**1. Measurement of Tensile Modulus**

Tensile modulus was measured through a universal testing machine (UTM) after coating the photocurable composition prepared in the preparation example on a polyethylene terephthalate film to a thickness of 100 μm, curing the result by irradiating ultraviolet rays under a condition of light intensity being 1000 mJ/cm$^2$ or greater, then removing the release film, and laser cutting the specimen to a constant 10 mm width. Herein, the tensile modulus was obtained through a stress-strain (S-S) curve obtained by constantly tensioning with a measurement length of 50 mm and a tension rate of 50 mm/min at a measurement temperature of room temperature (25°C). The tensile modulus was obtained by multiplying the initial slope value of the S-S curve by 100.

**2. Measurement of Storage Modulus**

Each of the polarizing plates manufactured in the examples and the comparative examples was cut to a size of 5.3 mm width and 4.5 cm length using laser. After that, storage modulus was measured using a dynamic mechanical analyzer (DMA). The measurement mode was multi-frequency-strain, and the measurement was made while raising the temperature from -30°C to 160°C raised by 5°C per 1 minute.

### 3. Measurement of Thermal Expansion Coefficient

The photocurable composition prepared in the preparation example was coated between release PET, and then the result was cured under the same curing condition as in the examples so that the final thickness became 50 μm. After that, the cured material separated from the release PET was cut to a size of 6 mm width and 10 mm length. After that, CTE was measured using TMA by, while maintaining a tension load at 0.05 N, measuring changes in the length as the temperature was raised from 30°C to 150°C at a temperature raising rate of 5°C/min.

### 4. Evaluation on High Temperature Facilitation

A protective film was laminated on a polarizer using the photocurable composition prepared in the preparation example, and cured in the same manner as in the examples. After that, a polarizing plate was manufactured by coating the result on the polarizer in the same manner as in the examples and the comparative examples except that cracks were induced on the polarizer by scraping with a load of 300 g using a blunt pencil.

After that, the polarizing plate was cut to a 6 mm width and a 10 mm length, and after leaving the polarizing plate left unattended for 100 hours at 80°C, it was observed whether light leaked by the opening of cracks due to polarizer shrinkage, and the number of cracks having light leakage among the total cracks was calculated to derive a rate of crack occurrences in the polarizing plate.

In addition, the size of the polarizing plate was changed to measure a rate of crack occurrences in the polarizing plate when used in a 55 inch panel.

*Rate of crack occurrences: number of cracks having light leakage/number of total cracksx100 (%)

### 5. Evaluation on Adhesive Strength

A protective film was laminated on a polarizer using the photocurable composition prepared in the preparation example, and cured in the same manner as in the examples. After that, peel strength between the protective film and the polarizer being 2 N/cm or greater was determined as favorable, and being less than 2 N/cm was determined as poor.

### 6. Analysis on Protective Layer Component

An FTIR analysis was performed on the protective layer of each of the polarizing plates of the examples and the comparative examples, and the results are shown in the following Table 4 by analyzing the peak areas at 1720 $cm^{-1}$, 1410 $cm^{-1}$ and 910 $cm^{-1}$. In addition, a FTIR spectrum for Comparative Example 8 is shown in FIG. 5, and an FTIR spectrum for Example 1 is shown in FIG. 6. Measurements were each made before and after curing the protective layer composition. In addition, the range of Equation 1 was measured and is shown in the following Table 4.

[Table 4]

| Category | Peak Area | | | Equation 1 |
|---|---|---|---|---|
| | 1720 $cm^{-1}$ (C=O Bond) | Ia (Use Peak Intensity at 1410 $cm^{-1}$, Acryl) | Ie (Use Peak Intensity at 910 $cm^{-1}$, Epoxy) | |
| Example 1 | 3.38 | 0 | 0.06 | 1 |
| Example 2 | 6.83 | 0 | 0.06 | 1 |
| Comparative Example 7 | 8.05 | 0.47 | 0.34 | 0.07 |
| Comparative Example 8 | 8.46 | 0.61 | 0.03 | 0.05 |
| Comparative Example 9 | 7.18 | 0.28 | 0.03 | 0.1 |
| Comparative Example 10 | 7.29 | 0.38 | 0.02 | 0.05 |
| Comparative Example 11 | 7.60 | 0.85 | 0.03 | 0.08 |

(continued)

| Category | Peak Area | | | Equation 1 |
|---|---|---|---|---|
| | 1720 $cm^{-1}$ (C=O Bond) | Ia (Use Peak Intensity at 1410 $cm^{-1}$, Acryl) | Ie (Use Peak Intensity at 910 $cm^{-1}$, Epoxy) | |
| Comparative Example 12 | 7.00 | 0.28 | 0.03 | 0.1 |
| Comparative Example 13 | 7.40 | 0.37 | 0.03 | 0.08 |
| Comparative Example 14 | 7.16 | 0.33 | 0.03 | 0.08 |

In Equation 1, the peak at 1720 $cm^{-1}$ was selected as the peak at 1700 $cm^{-1}$ to 1740 $cm^{-1}$, and the peak at 1410 $cm^{-1}$ was selected as the peak at 1420 $cm^{-1}$ to 1380 $cm^{-1}$, and the ratio of peak intensity at 1410 $cm^{-1}$ with respect to the peak intensity at 1720 $cm^{-1}$ was calculated as Equation 1.

In addition, in Equation 1, the peak at 1720 $cm^{-1}$ was selected as the peak at 1700 $cm^{-1}$ to 1740 $cm^{-1}$, and the peak at 910 $cm^{-1}$ was selected as the peak at 920 $cm^{-1}$ to 900 $cm^{-1}$, and the ratio of peak intensity at 910 $cm^{-1}$ with respect to the peak intensity at 1720 $cm^{-1}$ was calculated as Ie.

The peak intensity corresponds to a peak area of the FTIR spectrum. The peak area may be derived using a direct integration method. Alternatively, assuming one peak of the FTIR spectrum having Gaussian distribution, the peak was calculated by the product of the height and the half value width of the peak.

From the results, it was identified that the polarizing plate protective layers of Example 1 and Example 2 did not comprise an acrylate group, whereas the polarizing plate protective layers of Comparative Examples 7 to 14 included an acrylate group.

**7. Test on Polarizing Plate Contractile Force**

Contractile force of the polarizing plate of Example 1 was tested. As for the contractile force, contractile force in an MD direction or a TD direction was measured using a dynamic mechanical analyzer (DMA Q800, TA Instruments) by cutting the polarizing plate into a size of 2 mm (transmission axis direction)×50 mm (absorption axis direction), employing a gauge length of 15 mm, and leaving the specimen still for 4 hours or longer at 80°C in an isothermal state. Herein, a minimum load was measured over a thickness direction of the polarizer in order to maintain the polarizing plate flat before the measurement.

The measurements were repeated 8 times, and the results are shown in the following Table 5. Average contractile force in an MD direction was 8.03 N, and average contractile force in a TD direction was 6.62 N.

[Table 5]

| Category | Contractile Force | |
|---|---|---|
| | MD Direction | TD Direction |
| 1 Time | 7.9 N | 8.09 N |
| 2 Times | 7.73 N | 8.28 N |
| 3 Times | 7.9 N | 8.09 N |
| 4 Times | 7.73 N | 8.28 N |
| 5 Times | 8.12 N | 6.45 N |
| 6 Times | 8.11 N | 3.96 N |
| 7 Times | 9.06 N | 6.44 N |
| 8 Times | 7.58 N | 3.4 N |
| Average | 8.03 N | 6.62 N |

**<Experimental Results Depending on Inclusion of Acrylate in Protective Layer>**

A durability/heat resistance test and an adhesive strength test depending on the inclusion of acrylate in the protective layer were performed, and the results are shown in the following Table 6.

From these results, it was identified that high temperature durability and adhesive strength were excellent when the polarizing plate protective layer did not comprise an acrylate group (Examples 1 and 2) compared to when the polarizing plate protective layer included an acrylate group (Comparative Examples 7 to 14).

In other words, by the polarizing plate protective layers of the examples comprising an epoxy compound and an oxetane compound instead of an acrylic compound, a polarizer protecting effect obtained by the protective layer is excellent, which leads to an advantage of minimizing crack occurrences on the polarizer under a high temperature environment even when contractile force of the polarizing plate or the polarizer is large.

[Table 6]

| Category | Rate of Crack Occurrences as Result of Evaluation on High Temperature Facilitation (Unit Size) | AdhesiveStrength Test |
|---|---|---|
| Example 1 | 0% | Favorable |
| Example 2 | 10% | Favorable |
| Comparative Example 7 | 65% | Poor |
| Comparative Example 8 | 80% | Poor |
| Comparative Example 9 | 50% | Poor |
| Comparative Example 10 | 80% | Poor |
| Comparative Example 11 | 70% | Poor |
| Comparative Example 12 | 50% | Poor |
| Comparative Example 13 | 70% | Poor |
| Comparative Example 14 | 70% | Poor |

**<Experimental Results Depending on Protective Layer Composition>**

Experimental results on the polarizing plates of the examples and the comparative examples were compared, and the results are shown in the following Table 7.

[Table 7]

| Category | Layer Classification | @25°C Tensile Modulus (MPa) | @80°C Storage Modulus (MPa) | Glass Transition Temperature | @80°C Thermal Expansion Coefficient (ppm/K) | Rate of Crack Occurrences as Result of Evaluation on High Temperature Facilitation | | Adhesive Strength Test |
|---|---|---|---|---|---|---|---|---|
| | | | | | | Unit Size | 55 Inch Panel | |
| Example 1 | Protective Layer | 2,200 | 2,000 | 123°C | 82.33 | 0% | 0% | Favorable |
| | Protective Film | 2,300 | 1,900 | 100°C | 50 | | | |
| Example 2 | Protective Layer | 1,800 | 1,600 | 120°C | 99.87 | 10% | 5% | Favorable |
| | Protective Film | 2,300 | 1,900 | 100°C | 50 | | | |
| Comparative Example 1 | Protective Layer | 1,200 | - | - | - | 100 % | | Favorable |
| | Protective Film | 2,300 | - | - | - | | | |
| Comparative Example 2 | Protective Layer | 2,200 | 2,000 | 123°C | 82.33 | 80% | 40% | Favorable |
| | Protective Film | 2,300 | 1,900 | 100°C | 50 | | | |
| Comparative Example 3 | Protective Layer | - | 800 or Less | 130°C | 110 | 100 % | 100% | - |
| | Protective Film | - | 1,900 | 100°C | 50 | | | |
| Comparative Example 4 | Protective Layer | - | 900 | 95°C | 223 | 100 % | 100% | - |
| | Protective Film | - | 1,900 | 100°C | 50 | | | |
| Comparative Example 5 | Adhesive Layer | 1,300 | - | - | - | 100 % | | Favorable |
| | Protective Film | 2,300 | - | - | - | | | |
| Comparative Example 6 | Adhesive Layer | 2,200 | - | - | - | - | - | Poor |
| | Protective Film | 2,300 | - | - | - | | | |
| Comparative Example 16 | Protective Layer | - | 300 or Less | 62°C | 1,000 or Greater | 100 % | 100% | - |
| | Protective Film | - | 1,900 | 100°C | 50 | | | |
| Reference | Protective Layer | - | 75 | 71°C | 1,064 | 100 % | 100% | - |

(continued)

| Category | Layer Classifica tion | @25°C Tensi le Modul us (MPa) | @80°C Stora ge Modul us (MPa) | Glass Transiti on Temperat ure | @80°C Thermal Expansio n Coeffici ent (ppm/K) | Rate of Crack Occurrenc es as Result of Evaluatio n on High Temperatu re Facilitat ion | | Adhesiv e Strengt h Test |
|---|---|---|---|---|---|---|---|---|
| | | | | | | Uni t Siz e | 55 Inch Pane 1 | |
| Example 17 | Protective Film | - | 1,900 | 100°C | 50 | | | |
| | | | | | | | | |
| * - means that the test was not performed. | | | | | | | | |

The protective layers of the polarizing plates of Examples 1 and 2 had high tensile modulus and were able to effectively protect the polarizer, whereas the protective layer of the polarizing plate according to Comparative Example 1 had low tensile modulus, and was not able to effectively protect the polarizer, and cracks occurred as a result.

In addition, Example 1 and Example 2 having a thick protective layer had an excellent polarizer protecting effect by protective layer, whereas the polarizing plate of Comparative Example 2 had a thin protective layer with a thickness of 2 μm, and cracks occurred since the protective layer was not able to sufficiently protect the polarizer.

In Examples 1 and 2, the protective layer had a low thermal expansion coefficient and excellent storage modulus, and the protective layer effectively suppressed stress applied to the polarizer, and thereby effectively suppressed crack occurrences on the polarizer caused by shrinkage or expansion of the polarizer under a high temperature environment. On the other hand, in Comparative Example 3 and Comparative Example 4, the protective layer had a high thermal expansion coefficient and significantly decreased storage modulus on the contrary, and the protective layer was not able to suppress stress applied to the polarizer, and as a result, was not able to effectively suppress crack occurrences on the polarizer under a high temperature environment.

It was identified that the polarizing plate according to Comparative Example 5 had crack occurrences close to 100% based on the evaluation on high temperature facilitation although the total thickness of "the adhesive layer and the protective film" was large of 82 μm. It was identified that, when increasing tensile modulus of the adhesive layer while maintaining the structure of "adhesive layer and protective film" in order to improve performance of the polarizing plate to which the protective film was laminated by the medium of an adhesive layer of Comparative Example 5, adhesive strength of the adhesive layer for the protective film decreased (Comparative Example 6).

Through these results, it was identified that adhesive strength with the protective film decreased when the adhesive layer had high storage modulus. The adhesive layer of the comparative examples and the protective layer of the examples are the same in terms of location in that they are formed on one surface of the polarizer, however, required properties for each are different. The polarizing plate protective layer of the examples had excellent storage modulus without a separate protective film, and thereby had an outstanding ability to protect the polarizer under a high temperature environment.

In other words, Examples 1 and 2 resolve problems of a polarizing plate having the structure of "adhesive layer and protective film", and have an advantage of effectively protecting a polarizer with just a thin protective layer without a separate protective film.

The polarizing plate of Comparative Example 16 included an acrylic compound in the protective layer, and in this case, it was identified that a number of cracks occurred based on the evaluation on high temperature facilitation since the thermal expansion coefficient of the protective layer was too high (1,000 ppm/K or greater), and the storage modulus was low (300 MPa or less) .

In the polarizing plate of Reference Example 17, the glass transition temperature of the protective layer was very low of lower than 90°C, the thermal expansion coefficient was large (1,064 ppm/K), and the storage modulus significantly decreased (75 MPa). In this case, it was identified that a number of cracks occurred based on the evaluation on high temperature facilitation since the protective layer had significantly decreased high temperature durability.

## Claims

**1.** A polarizing plate comprising:

a polarizer (10); and
a protective layer (20) , which is on one surface or both surfaces of the polarizer directly adjoining the polarizer, wherein the protective layer is a cured material of a photocurable composition for a polarizing plate protective layer comprising an epoxy compound and an oxetane-based compound, and
in a spectrum by Fourier transform infrared spectroscopy (FTIR) of the protective layer, the following Equation 1 is satisfied:

[Equation 1]

$$0.9 \leq \frac{I_e}{I_a + I_e}$$

in Equation 1,
$I_e$ is a ratio of peak intensity at 920 $cm^{-1}$ to 900 $cm^{-1}$ with respect to peak intensity at 1740 $cm^{-1}$ to 1700 $cm^{-1}$ in the spectrum by Fourier transform infrared spectroscopy (FTIR) of the protective layer; and
$I_a$ is peak intensity at 1420 $cm^{-1}$ to 1380 $cm^{-1}$ with respect to peak intensity at 1740 $cm^{-1}$ to 1700 $cm^{-1}$ in the spectrum by Fourier transform infrared spectroscopy (FTIR) of the protective layer.

**2.** The polarizing plate of Claim 1, wherein the protective layer has a thickness of 4 μm to 11 μm.

**3.** The polarizing plate of Claim 1, wherein the protective layer has a thermal expansion coefficient of 100 ppm/K or less at 80ºC.

**4.** The polarizing plate of Claim 1, wherein the protective layer has a glass transition temperature (Tg) of higher than or equal to 90ºC and lower than or equal to 170ºC.

**5.** The polarizing plate of Claim 1, wherein the protective layer has a storage modulus of 1,500 MPa or greater at 80ºC.

**6.** The polarizing plate of Claim 1, wherein the protective layer has a tensile modulus of 1,700 MPa or greater at 25ºC.

**7.** The polarizing plate of Claim 1, wherein, when leaving the polarizing plate unattended for 4 hours or longer at 80ºC, a contractile force in any one or more of an absorption axis direction (MD direction) and a transmission axis direction (TD direction) is from 3 N to 10 N.

**8.** The polarizing plate of Claim 1, wherein the polarizing plate satisfies the following Equation A:

[Equation A]

$$0.01 \leq \frac{L_c - L_e}{L_i} \leq 1$$

in Equation A,
$L_c$ is a contractile force of a region corresponding to a circle area with a diameter of 1 cm having the center of the polarizing plate as the origin;
$L_e$ is a polarizing plate contractile force of a region corresponding to a circle area with a diameter of 1 cm adjoining two edge portions meeting at each vertex of the polarizing plate; and
$L_i$ is an average contractile force in an absorption axis direction (MD direction) or a transmission axis direction (TD direction) of the polarizer; or an average contractile force in an absorption axis direction (MD direction) or a transmission axis direction (TD direction) of the polarizing plate.

**9.** The polarizing plate of Claim 1, wherein the epoxy compound comprises an alicyclic epoxy compound.

**10.** The polarizing plate of Claim 1, wherein the epoxy compound and the oxetane-based compound have a weight ratio of 9:1 to 1:9.

**11.** The polarizing plate of Claim 1, comprising:

wherein the protective layer is on one surface of the polarizer, and
the polarizing plate further comprises a protective film attached on a surface opposite to the protective layer on the one surface of the polarizer by an adhesive layer,
wherein the protective film has a tensile modulus of 1700 MPa or greater at 25ºC.

**12.** The polarizing plate of Claim 1, wherein the protective layer is on both surfaces of the polarizer.

**13.** The polarizing plate of Claim 1, further comprising a gluing layer on a surface opposite to a surface facing the polarizer of the protective layer.

**14.** An image display device comprising the polarizing plate of any one of Claims 1 to 13.

**Patentansprüche**

**1.** Polarisierende Platte, umfassend:

einen Polarisator (10); und
eine Schutzschicht (20), die sich direkt an den Polarisator angrenzend auf einer Oberfläche oder auf beiden Oberflächen des Polarisators befindet,
wobei die Schutzschicht ein gehärtetes Material aus einer photohärtbaren Zusammensetzung für eine Schutzschicht für eine polarisierende Platte ist, die eine Epoxidverbindung und eine Verbindung auf Oxetanbasis umfasst, und
in einem Spektrum durch Fourier-Transformations-Infrarotspektroskopie (FTIR) der Schutzschicht die folgende Gleichung 1 erfüllt ist:

[Gleichung 1]

$$0.9 \leq \frac{I_e}{I_a + I_e}$$

in Gleichung 1,
$I_e$ ist ein Verhältnis einer Spitzenintensität bei 920 $cm^{-1}$ bis 900 $cm^{-1}$ gegenüber einer Spitzenintensität bei 1740 $cm^{-1}$ bis 1700 $cm^{-1}$ in dem Spektrum durch Fourier-Transformations-Infrarotspektroskopie (FTIR) der Schutzschicht; und
$I_a$ ist eine Spitzenintensität bei 1420 $cm^{-1}$ bis 1380 $cm^{-1}$ gegenüber einer Spitzenintensität bei 1740 $cm^{-1}$ bis 1700 $cm^{-1}$ in dem Spektrum durch Fourier-Transformations-Infrarotspektroskopie (FTIR) der Schutzschicht.

**2.** Polarisierende Platte nach Anspruch 1, wobei die Schutzschicht eine Dicke von 4 $\mu$m bis 11 $\mu$m aufweist.

**3.** Polarisierende Platte nach Anspruch 1, wobei die Schutzschicht einen Wärmeausdehnungskoeffizienten von 100 ppm/K oder weniger bei 80°C aufweist.

**4.** Polarisierende Platte nach Anspruch 1, wobei die Schutzschicht eine Glasübergangstemperatur (Tg) von höher als oder gleich 90°C und niedriger als oder gleich 170°C aufweist.

**5.** Polarisierende Platte nach Anspruch 1, wobei die Schutzschicht einen Speichermodul von 1.500 MPa oder mehr bei 80°C aufweist.

**6.** Polarisierende Platte nach Anspruch 1, wobei die Schutzschicht einen Zugmodul von 1.700 MPa oder mehr bei 25°C aufweist.

**7.** Polarisierende Platte nach Anspruch 1, wobei, wenn die polarisierende Platte für 4 Stunden oder länger bei 80°C unbeaufsichtigt gelassen wird, eine kontraktile Kraft in einer oder mehreren von einer Absorptionsachsenrichtung (MD-Richtung) und einer Transmissionsachsenrichtung (TD-Richtung) von 3 N bis 10 N beträgt.

**8.** Polarisierende Platte nach Anspruch 1, wobei die polarisierende Platte die folgende Gleichung A erfüllt:

[Gleichung A]

$$0.01 \leq \frac{L_c - L_e}{L_i} \leq 1$$

in Gleichung A,
$L_c$ ist eine kontraktile Kraft eines Bereichs, der einer Kreisfläche mit einem Durchmesser von 1 cm entspricht, die das Zentrum der polarisierenden Platte als Ursprung aufweist;
$L_e$ ist eine kontraktile Kraft der polarisierenden Platte eines Bereichs, der einer Kreisfläche mit einem Durchmesser von 1 cm entspricht, die an zwei Randabschnitte angrenzt, die sich an jedem Scheitelpunkt der polarisierenden Platte treffen; und
$L_i$ ist eine durchschnittliche kontraktile Kraft in einer Absorptionsachsenrichtung (MD-Richtung) oder einer Transmissionsachsenrichtung (TD-Richtung) des Polarisators; oder eine durchschnittliche kontraktile Kraft in Richtung einer Absorptionsachse (MD-Richtung) oder in Richtung einer Transmissionsachse (TD-Richtung) der polarisierenden Platte.

**9.** Polarisierende Platte nach Anspruch 1, wobei die Epoxidverbindung eine alicyclische Epoxidverbindung umfasst.

**10.** Polarisierende Platte nach Anspruch 1, wobei die Epoxidverbindung und die Verbindung auf Oxetanbasis ein Gewichtsverhältnis von 9:1 bis 1:9 aufweisen.

**11.** Polarisierende Platte nach Anspruch 1, umfassend:

wobei sich die Schutzschicht auf einer Oberfläche des Polarisators befindet, und
die polarisierende Platte weiter eine Schutzfolie umfasst, die auf einer der Schutzschicht auf der einen Oberfläche des Polarisators gegenüberliegenden Oberfläche durch eine Haftschicht befestigt ist,
wobei die Schutzfolie einen Zugmodul von 1700 MPa oder mehr bei 25°C aufweist.

**12.** Polarisierende Platte nach Anspruch 1, wobei sich die Schutzschicht auf beiden Oberflächen des Polarisators befindet.

**13.** Polarisierende Platte nach Anspruch 1, die weiter eine Klebeschicht auf einer Oberfläche gegenüber einer dem Polarisator zugewandten Oberfläche der Schutzschicht umfasst.

**14.** Bildanzeigevorrichtung, umfassend die polarisierende Platte nach einem der Ansprüche 1 bis 13.

## Revendications

**1.** Plaque de polarisation comprenant :

un polariseur (10) ; et
une couche de protection (20) qui est sur une surface ou sur les deux surfaces du polariseur directement reliée au polariseur,
dans laquelle la couche de protection est un matériau durci d'une composition photodurcissable pour une couche de protection de plaque de polarisation comprenant un composé époxy et un composé à base d'oxétane, et
dans un spectre par spectroscopie infrarouge à transformée de Fourier (FTIR) de la couche de protection,

l'Équation 1 suivante est satisfaite :

[Équation 1]

$$0.9 \leq \frac{I_e}{I_a + I_e}$$

dans l'Équation 1,
$I_e$ est un rapport entre une intensité maximale à 920 $cm^{-1}$ à 900 $cm^{-1}$ et une intensité maximale à 1740 $cm^{-1}$ à 1700 $cm^{-1}$ dans le spectre par spectroscopie infrarouge à transformée de Fourier (FTIR) de la couche de protection ; et
$I_a$ est une intensité maximale à 1420 $cm^{-1}$ à 1380 $cm^{-1}$ par rapport à une intensité maximale à 1740 $cm^{-1}$ à 1700 $cm^{-1}$ dans le spectre par spectroscopie infrarouge à transformée de Fourier (FTIR) de la couche de protection.

**2.** Plaque de polarisation selon la revendication 1, dans laquelle la couche de protection présente une épaisseur de 4 $\mu$m à 11 $\mu$m.

**3.** Plaque de polarisation selon la revendication 1, dans laquelle la couche de protection présente un coefficient d'expansion thermique de 100 ppm/K ou moins à 80 °C.

**4.** Plaque de polarisation selon la revendication 1, dans laquelle la couche de protection présente une température de transition vitreuse (Tg) supérieure ou égale à 90 °C et inférieure ou égale à 170 °C.

**5.** Plaque de polarisation selon la revendication 1, dans laquelle la couche de protection présente un module de stockage de 1500 MPa ou plus à 80 °C.

**6.** Plaque de polarisation selon la revendication 1, dans laquelle la couche de protection présente un module de tension de 1 700 MPa ou plus à 25 °C.

**7.** Plaque de polarisation selon la revendication 1, dans laquelle, lorsque la plaque de polarisation est laissée sans surveillance pendant 4 heures ou plus longtemps à 80 °C, une force contractile dans l'une quelconque ou plusieurs parmi une direction d'axe d'absorption (direction MD) et une direction d'axe de transmission (direction RD) va de 3 N à 10 N.

**8.** Plaque de polarisation selon la revendication 1, dans laquelle la plaque de polarisation satisfait à l'Équation A suivante :

[Équation A]

$$0.01 \leq \frac{L_c - L_e}{L_i} \leq 1$$

dans l'Équation A,
$L_c$ est une force contractile d'une région correspondant à une zone circulaire avec un diamètre de 1 cm présentant le centre de la plaque de polarisation comme base ;
$L_e$ est une force contractile de plaque de polarisation d'une région correspondant à une zone circulaire avec un diamètre de 1 cm reliant deux portions de bord se rencontrant à chaque sommet de la plaque de polarisation ; et
$L_i$ est une force contractile moyenne dans une direction d'axe d'absorption (direction MD) ou une direction d'axe de transmission (direction TD) d'un polariseur; ou une force contractile moyenne dans une direction d'axe d'absorption (direction MD) ou une direction d'axe de transmission (direction TD) de la plaque de polarisation.

**9.** Plaque de polarisation selon la revendication 1, dans laquelle le composé époxy comprend un composé époxy alicyclique.

**10.** Plaque de polarisation selon la revendication 1, dans laquelle le composé époxy et le composé à base d'oxétane présentent un rapport pondéral de 9 : 1 à 1 : 9.

**11.** Plaque de polarisation selon la revendication 1, comprenant :

dans laquelle la couche de protection est sur une surface du polariseur, et
la plaque de polarisation comprend en outre un film de protection attaché sur une surface opposée à la couche de protection sur la surface du polariseur par une couche adhésive,
dans laquelle le film de protection présente un module de tension de 1700 MPa ou plus à 25 °C.

**12.** Plaque de polarisation selon la revendication 1, dans laquelle la couche de protection est sur les deux surfaces du polariseur.

**13.** Plaque de polarisation selon la revendication 1, comprenant en outre une couche collante sur une surface opposée à une surface faisant face au polariseur de la couche de protection.

**14.** Dispositif d'affichage d'image comprenant la plaque de polarisation selon l'une quelconque des revendications 1 à 13.

【FIG. 1】

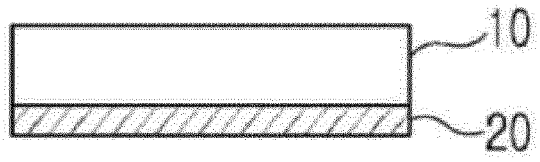


【FIG. 2】

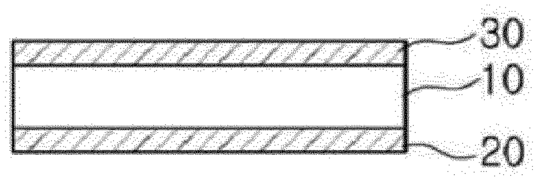


【FIG. 3】

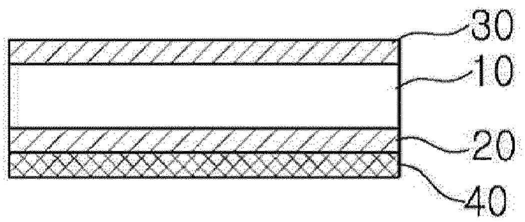


【FIG. 4】

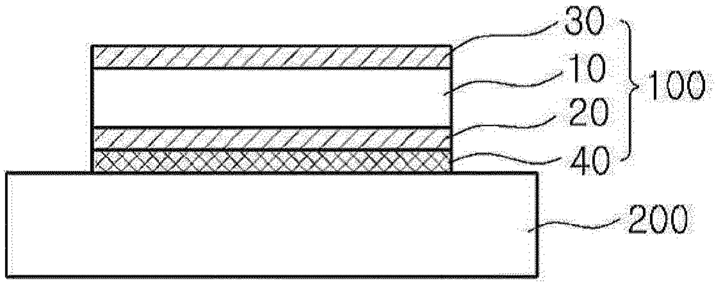


【FIG. 5】

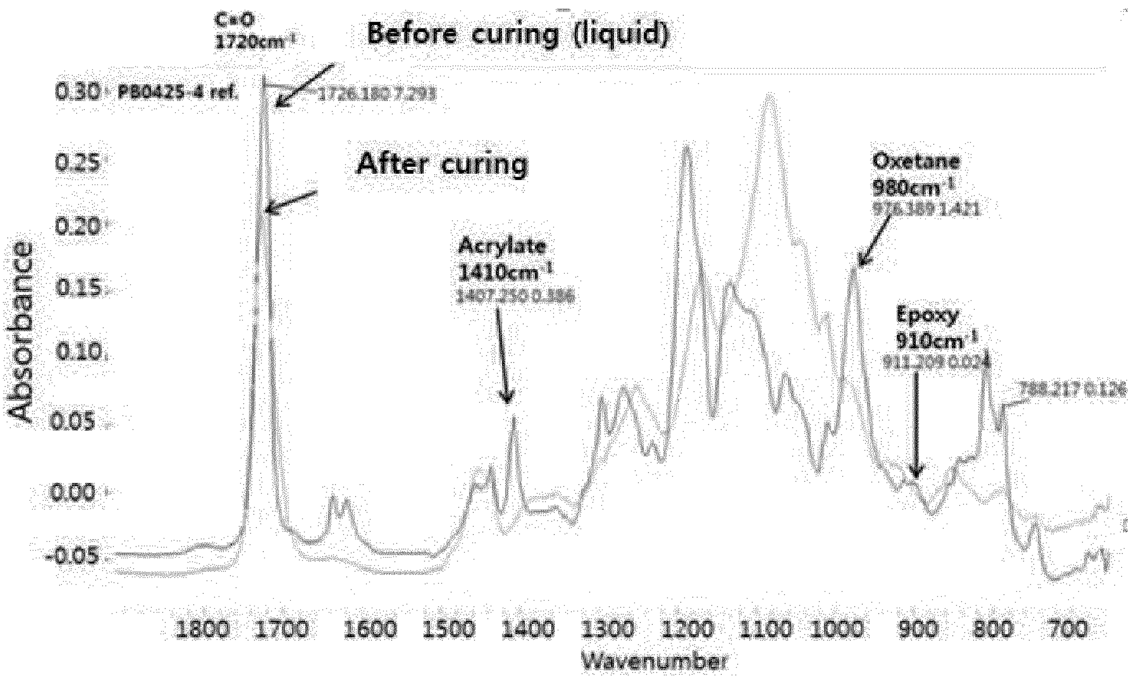
C=O
1720cm-1
Before curing (liquid)
PB0425-4 ref.
1726.180 7.293
After curing
Acrylate
1410cm-1
1407.250 0.386
Oxetane
980cm-1
976.389 1.421
Epoxy
910cm-1
911.209 0.024
788.217 0.126
Absorbance
Wavenumber

【FIG. 6】

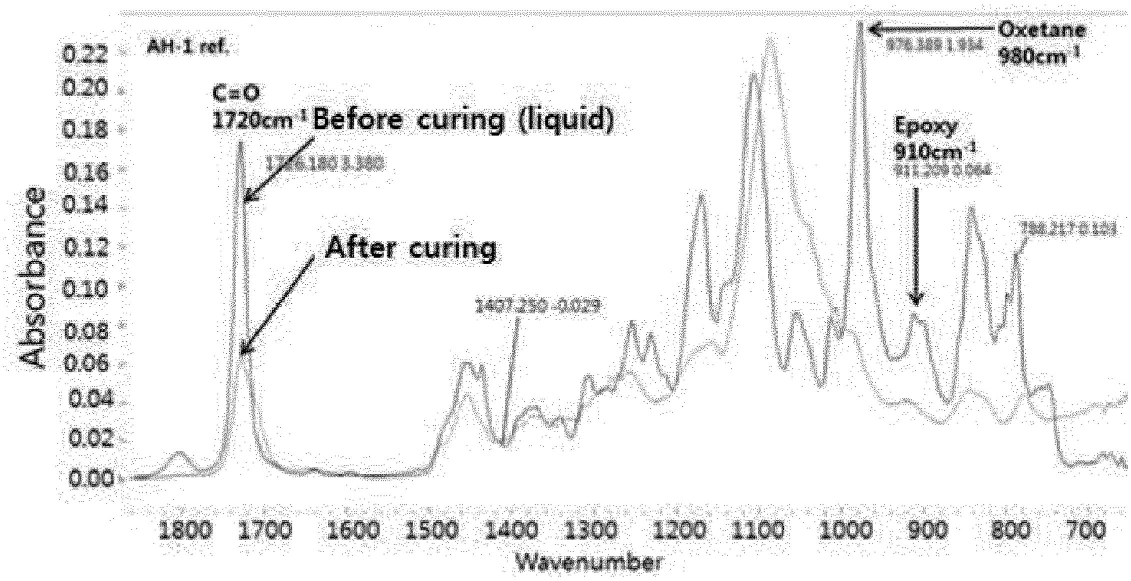
AH-1 ref.
C=O
1720cm-1
Before curing (liquid)
1726.180 3.380
After curing
1407.250 -0.029
Oxetane
980cm-1
976.389 1.934
Epoxy
910cm-1
911.209 0.064
788.217 0.103
Absorbance
Wavenumber